# EUROPEAN PATENT APPLICATION

(11) **EP 4 790 097 A1**
(43) Date of publication of application: **12.08.2026**
(21) Application number: 24874768.5
(22) Date of filing: 04.10.2024
(51) Int. Cl.: C08L 67/02, C08J 5/04, C08K 7/02, C08L 25/04, C08L 69/00, C08L 101/06

(54) **RESIN COMPOSITION, PELLET, AND MOLDED ARTICLE**

(30) Priority: 04.10.2023 JP 2023173208; 10.05.2024 JP 2024077314; 10.05.2024 JP 2024077315; 09.09.2024 JP 2024155142
(71) Applicant: Mitsubishi Chemical Corporation, Tokyo 100-8251 (JP)
(72) Inventor: SUZUKI Takayuki, Tokyo 100-8251 (JP); KISHISHITA Minoru, Tokyo 100-8251 (JP); HIWATASHI Yuki, Tokyo 100-8251 (JP); SHOJI Hidekazu, Tokyo 100-8251 (JP)
(74) Representative: Hoffmann Eitle
(86) International application number: PCT/JP2024/035669
(87) International publication number: WO 2025/075169

(57) **Abstract**

Provided are a novel polybutylene terephthalate resin composition, a pellet, and a molded article. The resin composition according to the present disclosure contains a polybutylene terephthalate resin, and at least one of an amorphous thermoplastic resin having a carbonate bond and/or an ester bond or a polystyrene-based resin, and the polybutylene terephthalate resin has an active titanium parameter X shown below of 25 or less.

## Description

### Technical Field

The present invention relates to a resin composition, pellets, and a molded article. In particular, the present invention relates to a resin composition containing a polybutylene terephthalate resin as a main component.

### Background Art

A polybutylene terephthalate resin, which is a typical engineering plastic among thermoplastic polyester resins, is excellent in ease of molding processing, mechanical properties, heat resistance, chemical resistance, aroma retainability, and other physical and chemical properties, and therefore is widely used for injection-molded articles such as automobile parts, electrical and electronic parts, and precision equipment parts.

Here, when a resin composition containing the polybutylene terephthalate resin is injection-molded, it is desirable that a crystallization temperature Tc at the time of temperature decrease is high. This is because when the crystallization temperature Tc at the time of temperature decrease is high, a molding cycle is improved.

In response to the above issue, a polybutylene terephthalate resin composition having a high crystallization temperature Tc at the time of temperature decrease has been studied (Patent Documents 1 and 2).

On the other hand, since the polybutylene terephthalate resin is a crystalline resin, a molding shrinkage rate is large. In particular, when an inorganic filler such as glass fiber is blended, anisotropy tends to increase, and the molded article may be warped. Therefore, in order to reduce warpage, a method of mixing various amorphous resins has been proposed (Patent Documents 3 to 5).

In addition, the polybutylene terephthalate resin has a feature of being excellent in mechanical performance, electrical characteristics, processing characteristics, and the like, and is widely used for various applications (Patent Documents 6 to 8).

### Citation List

### Patent Literature

Patent Document 1: JP 2024-42437 A
Patent Document 2: JP 2011-084640 A
Patent Document 3: JP 2006-16559 A
Patent Document 4: JP 2007-314619 A
Patent Document 5: JP 2020-84037 A
Patent Document 6: WO 2019/217680 A
Patent Document 7: JP 2018-203932 A
Patent Document 8: WO 2020/246335 A

### Summary of Invention

### Technical Problem

As described above, the polybutylene terephthalate resin is widely used, and further a new material is required.

An object of the present invention is to solve such issues, and an object thereof is to provide a novel polybutylene terephthalate resin composition, a pellet, and a molded article.

### Solution to Problem

The above issues are solved by the following.
[1] A resin composition containing:
   a polybutylene terephthalate resin; and
   at least one of an amorphous thermoplastic resin having a carbonate bond and/or an ester bond or a polystyrene-based resin,
   wherein the polybutylene terephthalate resin has an active titanium parameter X shown below of 25 or less:
      [Math. 1] $d \left[COOH\right] / dt = k \times \left[OH\right] \times X$
   where d [COOH]/dt represents an amount of change over time in a terminal carboxy group concentration caused by factors other than hydrolysis reactions when polybutylene terephthalate is held at a constant temperature (T) under a nitrogen atmosphere,
   t represents time (min),
   [COOH] represents the terminal carboxy group concentration (µeq/g) of polybutylene terephthalate,
   [OH] represents the terminal hydroxy group concentration (µeq/g) of polybutylene terephthalate, and k is a constant given by the following Equation (2) as a function of a temperature (T):
      [Math. 2] $log \left(k\right) = log \left(A\right) - \left(ΔE/R\right) \times \left(1/T\right)$
   where log is a natural logarithm,
   A is a constant, $log \left(A\right) = 17.792 ,$
   ΔE and R are constants, $ΔE / R = 13623.5 ,$ and
   T represents the absolute temperature (K).
[2] A resin composition containing:
   a polybutylene terephthalate resin; and
   at least one selected from the group consisting of an inorganic filler, a release agent, and a stabilizer,
   wherein the polybutylene terephthalate resin has a total nitrogen element amount of from 0.1 to 3000 ppm by mass and an active titanium parameter X shown below of 25 or less:
      [Math. 3] $d \left[COOH\right] / dt = k \times \left[OH\right] \times X$
   where d [COOH]/dt represents an amount of change over time in a terminal carboxy group concentration caused by factors other than hydrolysis reactions when polybutylene terephthalate is held at a constant temperature (T) under a nitrogen atmosphere,
   t represents time (min),
   [COOH] represents the terminal carboxy group concentration (µeq/g) of polybutylene terephthalate,
   [OH] represents the terminal hydroxy group concentration (µeq/g) of polybutylene terephthalate, and k is a constant given by the following Equation (2) as a function of a temperature (T):
      [Math. 4] $log \left(k\right) = log \left(A\right) - \left(ΔE/R\right) \times \left(1/T\right)$
   where log is a natural logarithm,
   A is a constant, $log \left(A\right) = 17.792 ,$
   ΔE and R are constants, $ΔE / R = 13623.5 ,$ and
   T represents the absolute temperature (K).
[3] A resin composition containing:
   a polybutylene terephthalate resin; and
   an amorphous thermoplastic resin having a carbonate bond and/or an ester bond,
   wherein the polybutylene terephthalate resin has an active titanium parameter X shown below of 25 or less.
      [Math. 5] $d \left[COOH\right] / dt = k \times \left[OH\right] \times X$
   where d [COOH]/dt represents an amount of change over time in a terminal carboxy group concentration caused by factors other than hydrolysis reactions when polybutylene terephthalate is held at a constant temperature (T) under a nitrogen atmosphere,
   t represents time (min),
   [COOH] represents the terminal carboxy group concentration (µeq/g) of polybutylene terephthalate,
   [OH] represents the terminal hydroxy group concentration (µeq/g) of polybutylene terephthalate, and k is a constant given by the following Equation (2) as a function of a temperature (T):
      [Math. 6] $log \left(k\right) = log \left(A\right) - \left(ΔE/R\right) \times \left(1/T\right)$
   where log is a natural logarithm,
   A is a constant, $log \left(A\right) = 17.792 ,$
   ΔE and R are constants, $ΔE / R = 13623.5 ,$ and
   T represents the absolute temperature (K).
[4] The resin composition according to any one of the above, wherein the amorphous thermoplastic resin having a carbonate bond and/or an ester bond contains a polycarbonate resin.
[5] The resin composition according to any one of the above, wherein the polybutylene terephthalate resin contains a polybutylene terephthalate resin derived from material recycling.
[6] The resin composition according to any one of the above, further containing a reactive compound.
[7] The resin composition according to any one of the above, wherein the polybutylene terephthalate resin contains a sodium element in an amount of from 0.1 to 100 ppm by mass,
   the polybutylene terephthalate resin contains a calcium element in an amount of from 0.1 to 3000 ppm by mass,
   a ratio α of active titanium represented by Equation (3) below in the polybutylene terephthalate resin is 0.50 or less,
   the amorphous thermoplastic resin having a carbonate bond and/or an ester bond contains a polycarbonate resin,
   the polybutylene terephthalate resin contains a polybutylene terephthalate resin derived from material recycling,
   the resin composition further contains a reactive compound, and
   the resin composition is for injection molding: $α = X / M$
   where X is an active titanium parameter, and
   M is a titanium element concentration (in ppm by mass) in the polybutylene terephthalate resin.
[8] The resin composition according to any one of the above, wherein the polybutylene terephthalate resin contains a sodium element in an amount of from 0.1 to 100 ppm by mass,
   the polybutylene terephthalate resin contains a calcium element in an amount of from 0.1 to 3000 ppm by mass,
   a ratio α of active titanium represented by Equation (3) below in the polybutylene terephthalate resin is 0.50 or less,
   the amorphous thermoplastic resin having a carbonate bond and/or an ester bond contains a polycarbonate resin,
   the polybutylene terephthalate resin contains a polybutylene terephthalate resin derived from material recycling,
   the resin composition further contains a reactive compound,
   the resin composition is for injection molding,
   the polybutylene terephthalate resin has a terminal carboxy group concentration of 25 µmol/g (µeq/g) or greater,
   the active titanium parameter X is 12 or less, and
   the polybutylene terephthalate resin has a Mw/Mn of 2.1 or greater: $α = X / M$
   where X is an active titanium parameter, and
   M is a titanium element concentration (in ppm by mass) in the polybutylene terephthalate resin.
[9] A resin composition containing:
   a polybutylene terephthalate resin; and
   a polystyrene-based resin,
   wherein the polybutylene terephthalate resin has an active titanium parameter X shown below of 25 or less:
      [Math. 7] $d \left[COOH\right] / dt = k \times \left[OH\right] \times x$
   where d [COOH]/dt represents an amount of change over time in a terminal carboxy group concentration caused by factors other than hydrolysis reactions when polybutylene terephthalate is held at a constant temperature (T) under a nitrogen atmosphere,
   t represents time (min),
   [COOH] represents the terminal carboxy group concentration (µeq/g) of polybutylene terephthalate,
   [OH] represents the terminal hydroxy group concentration (µeq/g) of polybutylene terephthalate, and k is a constant given by the following Equation (2) as a function of a temperature (T):
      [Math. 8] $log \left(k\right) = log \left(A\right) - \left(ΔE/R\right) \times \left(1/T\right)$
   where log is a natural logarithm,
   A is a constant, $log \left(A\right) = 17.792 ,$
   ΔE and R are constants, $ΔE / R = 13623.5 ,$ and
   T represents the absolute temperature (K).
[10] The resin composition according to any one of the above, wherein the polybutylene terephthalate resin contains a titanium element in an amount of from 30 to 500 ppm by mass.
[11] The resin composition according to any one of the above, wherein the polybutylene terephthalate resin contains a sodium element in an amount of from 0.1 to 100 ppm by mass.
[12] The resin composition according to any one of the above, wherein the polybutylene terephthalate resin contains a calcium element in an amount of from 0.1 to 3000 ppm by mass.
[13] The resin composition according to any one of the above, wherein a ratio α of active titanium represented by Equation (3) below in the polybutylene terephthalate resin is 0.50 or less: $α = X / M$
   where X is an active titanium parameter, and
   M is a titanium element concentration (in ppm by mass) in the polybutylene terephthalate resin.
[14] The resin composition according to any one of the above, wherein the polybutylene terephthalate resin contains a polybutylene terephthalate resin derived from material recycling.
[15] The resin composition according to any one of the above, wherein the polybutylene terephthalate resin contains two or more polybutylene terephthalate resins having different intrinsic viscosities.
[16] The resin composition according to any one of the above, which is for injection molding.
[17] The resin composition according to any one of the above, wherein the polybutylene terephthalate resin contains a sodium element in an amount of from 0.1 to 100 ppm by mass,
   the polybutylene terephthalate resin contains a calcium element in an amount of from 0.1 to 3000 ppm by mass,
   a ratio α of active titanium represented by Equation (3) below in the polybutylene terephthalate resin is 0.50 or less,
   the polybutylene terephthalate resin contains a polybutylene terephthalate resin derived from material recycling,
   the polybutylene terephthalate resin contains two or more polybutylene terephthalate resins having different intrinsic viscosities, and
   the resin composition is for injection molding: $α = X / M$
   where X is an active titanium parameter, and
   M is a titanium element concentration (in ppm by mass) in the polybutylene terephthalate resin.
[18] The resin composition according to any one of the above, wherein the polybutylene terephthalate resin contains a sodium element in an amount of from 0.1 to 100 ppm by mass,
   the polybutylene terephthalate resin contains a calcium element in an amount of from 0.1 to 3000 ppm by mass,
   a ratio α of active titanium represented by Equation (3) below in the polybutylene terephthalate resin is 0.50 or less,
   the polybutylene terephthalate resin contains a polybutylene terephthalate resin derived from material recycling,
   the polybutylene terephthalate resin contains two or more polybutylene terephthalate resins having different intrinsic viscosities,
   the resin composition is for injection molding,
   the polybutylene terephthalate resin has a terminal carboxy group concentration of 25 µmol/g (µeq/g) or greater,
   the active titanium parameter X is 12 or less, and
   the polybutylene terephthalate resin has a Mw/Mn of 2.1 or greater: $α = X / M$
   where X is an active titanium parameter, and
   M is a titanium element concentration (in ppm by mass) in the polybutylene terephthalate resin.
[19] A resin composition containing:
   a polybutylene terephthalate resin; and
   at least one selected from the group consisting of an inorganic filler, a release agent, and a stabilizer,
   wherein the polybutylene terephthalate resin has a total nitrogen element amount of from 0.1 to 3000 ppm by mass and an active titanium parameter X shown below of 25 or less:
      [Math. 9] $d \left[COOH\right] / dt = k \times \left[OH\right] \times X$
   where d [COOH]/dt represents an amount of change over time in a terminal carboxy group concentration caused by factors other than hydrolysis reactions when polybutylene terephthalate is held at a constant temperature (T) under a nitrogen atmosphere,
   t represents time (min),
   [COOH] represents the terminal carboxy group concentration (µeq/g) of polybutylene terephthalate,
   [OH] represents the terminal hydroxy group concentration (µeq/g) of polybutylene terephthalate, and k is a constant given by the following Equation (2) as a function of a temperature (T):
      [Math. 10] $log \left(k\right) = log \left(A\right) - \left(ΔE/R\right) \times \left(1/T\right)$
   where log is a natural logarithm,
   A is a constant, $log \left(A\right) = 17.792 ,$
   ΔE and R are constants, $ΔE / R = 13623.5 ,$ and
   T represents the absolute temperature (K).
[20] The resin composition according to any one of the above, wherein an inorganic filler is contained in an amount of from 10 to 150 parts by mass with respect to 100 parts by mass of the polybutylene terephthalate resin, and the inorganic filler is a fibrous reinforcing material.
[21] The resin composition according to any one of the above, containing a release agent and/or a stabilizer.
[22] The resin composition according to any one of the above, wherein the active titanium parameter X is 12 or less.
[23] The resin composition according to any one of the above, wherein the polybutylene terephthalate resin contains a titanium element in an amount of from 30 to 500 ppm by mass.
[24] The resin composition according to any one of the above, further containing a recycled polyethylene terephthalate resin.
[25] The resin composition according to any one of the above, wherein the polybutylene terephthalate resin has a total sulfur element amount of from 0.1 to 100 ppm by mass.
[26] The resin composition according to any one of the above, wherein the polybutylene terephthalate resin has a terminal vinyl group concentration of from 1 to 15 µmol/g.
[27] The resin composition according to any one of the above, wherein the polybutylene terephthalate resin has a dicarboxylic acid unit and a diol unit, 80 mol% or greater of all dicarboxylic acid units are each a terephthalic acid unit derived from a fossil resource, and 80 mol% or greater of all diol units are each a 1,4-butanediol unit derived from a fossil resource.
[28] The resin composition according to any one of the above, wherein the polybutylene terephthalate resin has a Mw/Mn of 2.1 or greater.
[29] The resin composition according to any one of the above, wherein the polybutylene terephthalate resin includes a recycled product.
[30] The resin composition according to any one of the above, further containing an epoxy compound.
[31] The resin composition according to any one of the above, wherein an inorganic filler is contained in an amount of from 10 to 150 parts by mass with respect to 100 parts by mass of the polybutylene terephthalate resin,
   the inorganic filler is a fibrous reinforcing material,
   the resin composition contains a release agent and/or a stabilizer,
   the active titanium parameter X is 12 or less,
   the polybutylene terephthalate resin contains a titanium element in an amount of from 30 to 500 ppm by mass,
   the polybutylene terephthalate resin has a terminal carboxy group concentration of 25 µmol/g or greater,
   the resin composition further contains a recycled polyethylene terephthalate resin,
   the polybutylene terephthalate resin has a total sulfur element amount of from 0.1 to 100 ppm by mass,
   the polybutylene terephthalate resin has a terminal vinyl group concentration of from 1 to 15 µmol/g,
   the polybutylene terephthalate resin has a dicarboxylic acid unit and a diol unit, 80 mol% or greater of all dicarboxylic acid units are each a terephthalic acid unit, and 80 mol% or greater of all diol units are each a 1,4-butanediol unit,
   the polybutylene terephthalate resin has a Mw/Mn of 2.1 or greater, and
   the polybutylene terephthalate resin includes a recycled product.
[32] The resin composition according to any one of the above, further containing an epoxy compound.
[33] The resin composition according to any one of the above, wherein the polybutylene terephthalate resin has a dicarboxylic acid unit and a diol unit, 80 mol% or greater of all dicarboxylic acid units are each a terephthalic acid unit derived from a fossil resource, and 80 mol% or greater of all diol units are each a 1,4-butanediol unit derived from a fossil resource.
[34] The resin composition according to any one of the above, which is for bonding an epoxy-based adhesive.
[35] A resin composition containing from 10 to 150 parts by mass of a fibrous reinforcing material with respect to 100 parts by mass of a polybutylene terephthalate resin,
   wherein the polybutylene terephthalate resin has a total nitrogen element amount of from 1 to 3000 ppm by mass.
[36] The resin composition according to any one of the above, wherein the polybutylene terephthalate resin has a total sulfur element amount of from 1 to 100 ppm by mass.
[37] The resin composition according to any one of the above, wherein the polybutylene terephthalate resin has a terminal vinyl group concentration of from 1 to 15 µmol/g.
[38] The resin composition according to any one of the above, wherein the polybutylene terephthalate resin has a dicarboxylic acid unit and a diol unit, 80 mol% or greater of all dicarboxylic acid units are each a terephthalic acid unit derived from a fossil resource, and 80 mol% or greater of all diol units are each a 1,4-butanediol unit derived from a fossil resource.
[39] The resin composition according to any one of the above, wherein the polybutylene terephthalate resin has a Mw/Mn of 2.1 or greater.
[40] The resin composition according to any one of the above, wherein the polybutylene terephthalate resin includes a recycled product.
[41] The resin composition according to any one of the above, wherein the polybutylene terephthalate resin has a total sulfur element amount of from 1 to 100 ppm by mass,
   the polybutylene terephthalate resin has a terminal vinyl group concentration of from 1 to 15 µmol/g,
   the polybutylene terephthalate resin has a dicarboxylic acid unit and a diol unit, 80 mol% or greater of all dicarboxylic acid units are each a terephthalic acid unit, and 80 mol% or greater of all diol units are each a 1,4-butanediol unit,
   the polybutylene terephthalate resin has a Mw/Mn of 2.1 or greater, and
   the polybutylene terephthalate resin includes a recycled product.
[42] The resin composition according to any one of the above, wherein the polybutylene terephthalate resin has a dicarboxylic acid unit and a diol unit, 80 mol% or greater of all dicarboxylic acid units are each a terephthalic acid unit derived from a fossil resource, and 80 mol% or greater of all diol units are each a 1,4-butanediol unit derived from a fossil resource.
[43] The resin composition according to any one of the above, which is for bonding an epoxy-based adhesive.
[44] A pellet of the resin composition described in any one of the above.
[45] A molded article formed from the resin composition described in any one of the above.
[46] A molded article formed from the pellet.
[47] A composite body including:
   the molded article described in any one of the above; and
   an adhesive layer,
   wherein the adhesive layer contains an epoxy-based adhesive.

### Advantageous Effects of Invention

According to the present invention, it is possible to provide a novel polybutylene terephthalate resin composition, a pellet, and a molded article.

### Description of Embodiments

An embodiment for carrying out the present invention (hereinafter, referred to simply as the "present embodiment") will be described below in detail. It should be noted that the present embodiment described below is an example for explaining the present invention, and the present invention is not limited to the present embodiment only.

In the present specification, an expression of numerical values "from X to Y" is used to denote a range in which X and Y are included as lower and upper limit values. "From A to B" means A or greater and B or less. In the upper limit value and the lower limit value of the numerical value in the present specification, any combination of the upper limit value and the lower limit value is an example of the present embodiment.

In the present specification, unless otherwise specified, the various physical property values and characteristic values are values obtained at 23°C.

In the present specification, ppm means ppm by mass.

In a case in which a measurement method or the like described by a standard presented in the present specification varies depending on the year, unless otherwise specified, the measurement method is based on the standard as of January 1, 2024. When a measurement method or the like described by a standard presented in the present specification is abolished as of January 1, 2024, the measurement method is based on the standard at the time of the abolishment.

A first resin composition of the present embodiment contains a polybutylene terephthalate resin and at least one of an amorphous thermoplastic resin having a carbonate bond and/or an ester bond or a polystyrene-based resin, and the polybutylene terephthalate resin has an active titanium parameter X shown below of 25 or less.
[Math. 11] $d \left[COOH\right] / dt = k \times \left[OH\right] \times X$
where d [COOH]/dt represents an amount of change over time in a terminal carboxy group concentration caused by factors other than hydrolysis reactions when polybutylene terephthalate is held at a constant temperature (T) under a nitrogen atmosphere,
t represents time (min),
[COOH] represents the terminal carboxy group concentration (µeq/g) of polybutylene terephthalate,
[OH] represents the terminal hydroxy group concentration (µeq/g) of polybutylene terephthalate, and k is a constant given by the following Equation (2) as a function of a temperature (T):
   [Math. 12] $log \left(k\right) = log \left(A\right) - \left(ΔE/R\right) \times \left(1/T\right)$
where log is a natural logarithm,
A is a constant, $log \left(A\right) = 17.792 ,$
ΔE and R are constants, $ΔE / R = 13623.5 ,$ and
T represents the absolute temperature (K).

With such a configuration, a resin composition having a high crystallization temperature Tc at the time of temperature decrease or a resin composition capable of providing a molded article having high weld strength can be produced.

**In** particular, by blending an amorphous thermoplastic resin having a carbonate bond and/or an ester bond, a resin composition having a high crystallization temperature Tc at the time of temperature decrease can be produced. This is because, when a thermoplastic resin having a carbonate bond and/or an ester bond is blended in the polybutylene terephthalate resin, the crystallization temperature Tc at the time of temperature decrease tends to increase. However, in production of a polybutylene terephthalate resin, a method using a titanium catalyst is common, and when the thermoplastic resin having a carbonate bond and/or an ester bond is blended in a polybutylene terephthalate resin containing a titanium catalyst, a transesterification reaction occurs between the polybutylene terephthalate resin and the thermoplastic resin having a carbonate bond and/or an ester bond. The transesterification reaction is likely to occur when activity of the titanium catalyst is high. **In** the present embodiment, it is presumed that by setting the active titanium parameter to 25 or less, the transesterification reaction between the resin composition containing the polybutylene terephthalate resin and the thermoplastic resin having a carbonate bond and/or an ester bond is suppressed, and a resin composition having a high crystallization temperature Tc at the time of temperature decrease can be produced.

The resin composition of the present embodiment can reduce mold release resistance during molding.

Further, the resin composition of the present embodiment can further improve transparency.

Furthermore, since the resin composition of the present embodiment has a high crystallization temperature Tc at the time of temperature decrease, a molding cycle is accelerated, and moldability can be improved.

On the other hand, by blending a polystyrene-based resin, a resin composition capable of providing a molded article having high weld strength can be produced.

In order to achieve low warpage of a molded article formed from the polybutylene terephthalate resin, it is conceivable to blend the polystyrene-based resin. However, when the polystyrene-based resin is blended in the polybutylene terephthalate resin, the weld strength tends to decrease.

Under such circumstances, the present inventor has found that the polybutylene terephthalate resin having low titanium activity is used. That is, when a polybutylene terephthalate resin is produced, in a common method, butylene glycol and terephthalic acid are reacted in the presence of a titanium catalyst. Here, also in the produced polybutylene terephthalate resin, when the titanium activity is high, a tetrahydrofuran gas derived from the butanediol terminal is likely to be generated. When the resin composition is molded in a state of containing a large amount of such a tetrahydrofuran gas, it is presumed that voids are likely to congregate at a flow terminal and the like in a mold, and the weld strength is reduced. **In** the present embodiment, it is presumed that by using the polybutylene terephthalate resin having low titanium activity and a polystyrene-based resin in combination, the generation of tetrahydrofuran gas derived from butanediol is effectively suppressed, and the weld strength can be improved. In particular, as shown in Examples below, in the present invention, surprisingly, an increase in weld strength of about 20% has been observed.

A second resin composition of the present embodiment contains a polybutylene terephthalate resin and at least one selected from the group consisting of an inorganic filler, a release agent, and a stabilizer, and the polybutylene terephthalate resin has a total nitrogen element amount of from 0.1 to 3000 ppm by mass and an active titanium parameter X shown below of 25 or less.
[Math. 13] $d \left[COOH\right] / dt = k \times \left[OH\right] \times X$
where d [COOH]/dt represents an amount of change over time in a terminal carboxy group concentration caused by factors other than hydrolysis reactions when polybutylene terephthalate is held at a constant temperature (T) under a nitrogen atmosphere,
t represents time (min),
[COOH] represents the terminal carboxy group concentration (µeq/g) of polybutylene terephthalate,
[OH] represents the terminal hydroxy group concentration (µeq/g) of polybutylene terephthalate, and k is a constant given by the following Equation (2) as a function of a temperature (T):
   [Math. 14] $log \left(k\right) = log \left(A\right) - \left(ΔE/R\right) \times \left(1/T\right)$
where log is a natural logarithm,
A is a constant, $log \left(A\right) = 17.792 ,$
ΔE and R are constants, $ΔE / R = 13623.5 ,$ and
T represents the absolute temperature (K).

By adopting such a configuration, it is possible to produce a resin composition capable of providing a molded article having a small gas content of the produced pellet and excellent adhesive strength with other members using an epoxy-based adhesive while maintaining mechanical strength. That is, it has been found that a large amount of gas may be contained in the produced pellet depending on the type of the polybutylene terephthalate resin. **In** the present embodiment, the use of a specific polybutylene terephthalate resin has succeeded in effectively suppressing gas generation.

Embodiments of the present invention will be described in detail below; however, description of constitutional requirements provided below is an example of embodiments of the present invention, and the present invention is not limited to these contents.

### Polybutylene Terephthalate Resin

The resin composition of the present embodiment preferably contains a polybutylene terephthalate resin having an active titanium parameter X shown below of 25 or less. In addition, the resin composition preferably contains the titanium element in an amount of from 30 to 500 ppm by mass.
[Math. 15] $d \left[COOH\right] / dt = k \times \left[OH\right] \times x$
where d [COOH]/dt represents an amount of change over time in a terminal carboxy group concentration caused by factors other than hydrolysis reactions when polybutylene terephthalate is held at a constant temperature (T) under a nitrogen atmosphere,
t represents time (min),
[COOH] represents the terminal carboxy group concentration (µeq/g) of polybutylene terephthalate,
[OH] represents the terminal hydroxy group concentration (µeq/g) of polybutylene terephthalate, and k is a constant given by the following Equation (2) as a function of a temperature (T):
   [Math. 16] $log \left(k\right) = log \left(A\right) - \left(ΔE/R\right) \times \left(1/T\right)$
where log is a natural logarithm,
A is a constant, $log \left(A\right) = 17.792 ,$
ΔE and R are constants, $ΔE / R = 13623.5 ,$ and
T represents the absolute temperature (K).

A titanium catalyst is generally added to the polymerization of the polybutylene terephthalate resin. However, it has been found that when the polymerized polybutylene terephthalate resin has high titanium catalytic activity, the transesterification reaction with an amorphous thermoplastic resin having a carbonate bond and/or an ester bond tends to easily occur. In particular, in the case of industrial mass production, extrusion is performed continuously for a long time with a large extruder; however, in such a case, transesterification tends to be further promoted.

In the present embodiment, it is presumed that the transesterification reaction with the amorphous thermoplastic resin having a polycarbonate bond and/or an ester bond can be effectively suppressed by using the polybutylene terephthalate resin having low titanium activity.

On the other hand, it has been found that when the titanium catalytic activity is high in the polymerized polybutylene terephthalate resin, tetrahydrofuran derived from butanediol tends to be easily generated. In particular, in the case of industrial mass production, extrusion is performed continuously for a long time with a large extruder; however, in such a case, tetrahydrofuran tends to be more easily generated.

In the present embodiment, it is presumed that generation of tetrahydrofuran gas in the molded article can be effectively suppressed and the weld strength can be improved by using the polybutylene terephthalate resin having low titanium activity.

The active titanium parameter X of the polybutylene terephthalate resin used in the present embodiment is 25 or less, preferably 20 or less, more preferably 15 or less, still more preferably 12 or less, and even more preferably 10 or less. The lower limit of the active titanium parameter X of the polybutylene terephthalate resin is preferably 0, and even if the value is 1 or greater, the required performance is sufficiently satisfied.

When two or more polybutylene terephthalate resins are used, it is preferable that the polybutylene terephthalate resin having the largest content satisfy the active titanium parameter, and it is more preferable that all the polybutylene terephthalate resins satisfy the active titanium parameter.

The polybutylene terephthalate resin synthesized using a titanium catalyst and having a low active titanium parameter X can be produced, for example, by the following method.
(1) A metal element concentration such as a sodium element concentration and a calcium element concentration in the polybutylene terephthalate resin is increased. These metal elements tend to be able to reduce the activity of the titanium catalyst.
(2) An alkali component in the polybutylene terephthalate resin is increased. Since the titanium catalyst is an acid catalyst, the activity tends to decrease when the alkali component is present.
(3) A terminal carboxylic acid concentration of the polybutylene terephthalate resin is increased.
(4) A recycled polybutylene terephthalate resin is used. Particularly, in a material recycled polybutylene terephthalate resin, the titanium active catalyst tends to be low. $α = X / M$
   where X is an active titanium parameter, and
   M is a titanium element concentration (in ppm by mass) in the polybutylene terephthalate resin.

A temporal change of the terminal carboxy group concentration is evaluated under a nitrogen atmosphere in order to prevent an influence of oxygen. When the water content in the polybutylene terephthalate resin to be evaluated is high, many hydrolysis reactions occur, and it becomes difficult to accurately grasp a decomposition behavior involving catalytic activity not due to hydrolysis; therefore, the water content is preferably low, and the evaluation is preferably performed at 300 ppm by mass or less. The evaluation is performed at a temperature of 245°C. Under such heat treatment conditions, a decrease in number average molecular weight caused by reactions other than the hydrolysis reaction caused by the moisture contained in the polybutylene terephthalate resin can be ignored, and an increase in the terminal carboxy group concentration due to the hydrolysis reaction can be regarded as being equal to an increase in terminal hydroxy group concentration before and after the heat treatment; therefore, an amount of change in the terminal carboxy group concentration due to the thermal decomposition reaction other than the hydrolysis reaction is determined by the following Equation (4).
Equation (4) $ΔAV \left(deg\right) = ΔAV \left(total\right) - ΔAV \left(hyd\right) = ΔAV \left(total\right) - ΔOH$
where ΔAV (deg) represents an amount of change in the terminal carboxy group concentration due to a thermal decomposition reaction,
ΔAV (total) represents a total amount of change in the terminal carboxy group concentration before and after heat treatment,
ΔAV (hyd) represents an amount of change in the terminal carboxy group concentration due to a hydrolysis reaction, and
ΔOH represents an amount of change in the terminal hydroxy group concentration before and after heat treatment.

The titanium element concentration in the polybutylene terephthalate resin used in the present embodiment is preferably 30 ppm by mass or greater, may be 35 ppm by mass or greater, may be 40 ppm by mass or greater, may be 45 ppm by mass or greater, may be 50 ppm by mass or greater, may be 55 ppm by mass or greater, may be 60 ppm by mass or greater, may be 65 ppm by mass or greater, may be 70 ppm by mass or greater, or may be 75 ppm by mass or greater, and is preferably 500 ppm by mass or less, may be 400 ppm by mass or less, may be 300 ppm by mass or less, may be 150 ppm by mass or less, may be 120 ppm by mass or less, may be 110 ppm by mass or less, may be 100 ppm by mass or less, may be 90 ppm by mass or less, or may be 80 ppm by mass or less.

The sodium element concentration in the polybutylene terephthalate resin used in the present embodiment is preferably 0.1 ppm by mass or greater, more preferably 0.5 ppm by mass or greater, still more preferably 0.7 ppm by mass or greater, even more preferably 0.9 ppm by mass or greater, further more preferably 1 ppm by mass or greater, and is preferably 100 ppm by mass or less, more preferably 50 ppm by mass or less, still more preferably 30 ppm by mass or less, even more preferably 20 ppm by mass or less, and further more preferably 10 ppm by mass or less. When the sodium element concentration is equal to or greater than the above lower limit value, the transesterification reaction tends to be more effectively suppressed. Furthermore, when the sodium element concentration is equal to or greater than the above lower limit value, the generation of tetrahydrofuran gas tends to be more effectively suppressed. When the sodium element concentration is equal to or lower than the above upper limit value, alkali decomposition resistance tends to further improve.

The sodium element in the polybutylene terephthalate resin is derived from, for example, a detergent in a resin cleaning step.

The calcium element concentration of the polybutylene terephthalate resin used in the present embodiment is preferably 0.1 ppm by mass or greater, more preferably 1 ppm by mass or greater, still more preferably 3 ppm by mass or greater, even more preferably 5 ppm by mass or greater, further more preferably 7 ppm by mass or greater, and preferably 3000 ppm by mass or less, preferably 2500 ppm by mass or less, preferably 2000 ppm by mass or less, preferably 1000 ppm by mass or less, more preferably 500 ppm by mass or less, still more preferably 300 ppm by mass or less, even more preferably 200 ppm by mass or less, and may be 100 ppm by mass or less, 50 ppm by mass or less, 30 ppm by mass or less, or 10 ppm by mass or less. When the calcium element concentration is equal to or greater than the above lower limit value, the transesterification reaction tends to be more effectively suppressed. Furthermore, when the calcium element concentration is equal to or greater than the above lower limit value, the generation of tetrahydrofuran gas tends to be more effectively suppressed. When the calcium element concentration is equal to or lower than the above upper limit value, alkali decomposition resistance tends to further improve.

The calcium element in the polybutylene terephthalate resin is derived from, for example, an inorganic filler material used as an inorganic filler.

The titanium element concentration, the sodium element concentration, and the calcium element concentration are measured according to the description of Examples below.

In the polybutylene terephthalate resin used in the present embodiment, a ratio α of active titanium represented by Equation (3) is preferably 0.50 or less. When the ratio α of active titanium is 0.50 or less, the transesterification reaction tends to be more effectively suppressed. $α = X / M$
where X is an active titanium parameter, and
M is a titanium element concentration (in ppm by mass) in the polybutylene terephthalate resin.

The ratio α of the active titanium is preferably 0.45 or less, more preferably 0.40 or less, still more preferably 0.35 or less, even more preferably 0.30 or less, further more preferably 0.25 or less, still further more preferably 0.20 or less, and even further more preferably 0.15 or less. Although the lower limit of the ratio α of the active titanium is preferably 0, even when the ratio α is 0.01 or greater, the required performance is sufficiently satisfied.

The resin composition of the present embodiment preferably contains a polybutylene terephthalate resin having a total nitrogen element amount of from 0.1 to 3000 ppm by mass. By using such a polybutylene terephthalate resin, the adhesive strength with an epoxy-based adhesive can be enhanced.

**In** the polybutylene terephthalate resin used in the present embodiment, the total nitrogen element amount is 0.1 ppm by mass or greater, preferably 1 ppm by mass or greater, more preferably 2 ppm by mass or greater, still more preferably 3 ppm by mass or greater, even more preferably 4 ppm by mass or greater, and is 3000 ppm by mass or less, preferably 2500 ppm by mass or less, more preferably 2000 ppm by mass or less, still more preferably 1000 ppm by mass or less, even more preferably 100 ppm by mass or less, further more preferably 50 ppm by mass or less, still further more preferably 20 ppm by mass or less, particularly preferably 10 ppm by mass or less. When the total nitrogen element amount is equal to or higher than the above lower limit value, the adhesive strength of the adhesive tends to further improve. When the total nitrogen element amount is equal to or less than the above upper limit value, a change in color tone tends to decrease.

The total nitrogen element amount is measured according to the description of Examples below.

In the polybutylene terephthalate resin used in the present embodiment, the total sulfur element amount is preferably 0.1 ppm by mass or greater, more preferably 1 ppm by mass or greater, still more preferably 2 ppm by mass or greater, even more preferably 4 ppm by mass or greater, further more preferably 7 ppm by mass or greater, and preferably 100 ppm by mass or less, more preferably 80 ppm by mass or less, still more preferably 60 ppm by mass or less, even more preferably 40 ppm by mass or less, further more preferably 25 ppm by mass or less, still further more preferably 20 ppm by mass or less, and particularly preferably 15 ppm by mass or less. When the total sulfur element amount is equal to or greater than the above lower limit value, the adhesive strength of the adhesive tends to further improve. When the total sulfur element amount is equal to or less than the above upper limit value, the amount of decomposed gas tends to decrease.

The total sulfur element amount is measured according to the description of Examples below.

In the polybutylene terephthalate resin used in the present embodiment, the total amount of the nitrogen element amount and the sulfur element amount is, for example, 0.2 ppm by mass or greater, preferably 0.5 ppm by mass or greater, preferably 1 ppm by mass or greater, preferably 2 ppm by mass or greater, more preferably 5 ppm by mass or greater, still more preferably 10 ppm by mass or greater, and even more preferably 12 ppm by mass or greater, and preferably 120 ppm by mass or less, more preferably 100 ppm by mass or less, still more preferably 60 ppm by mass or less, even more preferably 40 ppm by mass or less, further more preferably 30 ppm by mass or less, still further more preferably 25 ppm by mass or less, and particularly preferably 20 ppm by mass or less. When the total amount of the nitrogen element amount and the sulfur element amount is equal to or greater than the above lower limit value, the adhesive strength of the adhesive tends to further improve. When the total amount is equal to or less than the above upper limit value, the amount of decomposed gas or the change in color tone tends to decrease.

As such a polybutylene terephthalate resin having a large total nitrogen element amount or a large total sulfur element amount, a nitrogen source or a sulfur source (nitrogen element or sulfur element itself, resin additives containing nitrogen element or sulfur element, and the like) may be blended in a virgin polybutylene terephthalate resin, or a recycled polybutylene terephthalate resin may be used. Resin additives such as a lubricant, a release agent, and an antioxidant remain in the polybutylene terephthalate resin as a recycled product, and a nitrogen source and a sulfur source derived therefrom can be effectively used.

In particular, in the present embodiment, it is often preferable that the polybutylene terephthalate resin produced from a recycled product derived from a connector component and the like has a total nitrogen element amount satisfying a desired range.

An intrinsic viscosity of the polybutylene terephthalate resin is preferably 0.60 dL/g or greater, more preferably 0.70 dL/g or greater, still more preferably 0.75 dL/g or greater, even more preferably 0.80 dL/g or greater, and further more preferably 0.85 dL/g or greater. When the intrinsic viscosity is equal to or greater than the lower limit value, deterioration of physical properties such as strength tends to be effectively suppressed. The intrinsic viscosity of the polybutylene terephthalate resin is preferably 1.30 dL/g or less, more preferably 1.10 dL/g or less, still more preferably 1.00 dL/g or less, and even more preferably 0.90 dL/g or less. When the intrinsic viscosity is equal to or less than the upper limit value, a decrease in fluidity tends to be effectively suppressed.

In the present embodiment, two or more polybutylene terephthalate resins having different intrinsic viscosities may be used. For example, a polybutylene terephthalate resin having an intrinsic viscosity of from 0.60 to 0.75 dL/g and a polybutylene terephthalate resin having an intrinsic viscosity of greater than 0.75 dL/g and 0.95 dL/g or less g are blended at a mass ratio of from 1:99 to 10:90. With such a configuration, a deflection temperature under load of the resulting molded article tends to be higher.

The intrinsic viscosity is measured according to the description of Examples below.

In the resin composition of the present embodiment, the terminal carboxy group concentration (acid value) of the polybutylene terephthalate resin is preferably 100 µmol/g or less (µeq/g), more preferably 80 µmol/g or less, still more preferably 70 µmol/g or less, even more preferably 60 µmol/g or less, further more preferably 40 µmol/g or less, still further more preferably 30 µmol/g or less, and preferably 10 µmol/g or greater, more preferably 20 µmol/g or greater, still more preferably 25 µmol/g or greater, and even more preferably 27 µmol/g or greater. When the terminal carboxy group concentration is equal to or less than the above upper limit value, hydrolysis resistance tends to be excellent. When the terminal carboxy group concentration is equal to or greater than the above lower limit value, the adhesive strength to the adhesive tends to further improve.

When the resin composition of the present embodiment contains two or more polybutylene terephthalate resins, the terminal carboxy group concentration of the mixture is preferably in the above range.

The terminal carboxy group concentration of the polybutylene terephthalate resin is measured according to the description of Examples below.

The polybutylene terephthalate resin having such a terminal carboxy group concentration is produced, for example, by giving a thermal history of a melting point or higher such as melt-kneading.

In the resin composition of the present embodiment, the terminal hydroxy group concentration of the polybutylene terephthalate resin is preferably 110 µmol/g or less, more preferably 100 µmol/g or less, still more preferably 95 µmol/g or less, and preferably 30 µmol/g or greater, more preferably 35 µmol/g or greater, still more preferably 40 µmol/g or greater, even more preferably 50 µmol/g or greater. When the terminal hydroxy group concentration is the above upper limit value or less, the transesterification reaction is suppressed at the time of melt-kneading with another resin such as polycarbonate, and the molding cycle is accelerated. When the terminal hydroxy group concentration is equal to or greater than the above lower limit value, the adhesive strength to the adhesive tends to further improve.

When the resin composition of the present embodiment contains two or more polybutylene terephthalate resins, the terminal hydroxy group concentration of the mixture is preferably in the above range.

The terminal hydroxy group concentration of the polybutylene terephthalate resin is measured according to the description of Examples below.

The polybutylene terephthalate resin having such a terminal hydroxy group concentration is produced, for example, by giving a thermal history of a melting point or higher such as melt-kneading.

The terminal vinyl group concentration of the polybutylene terephthalate resin is preferably 50 µmol/g or less, more preferably 15 µmol/g or less, still more preferably 12 µmol/g or less, even more preferably 10 µmol/g or less, further more preferably 8 µmol/g or less, and preferably 1 µmol/g or greater, more preferably 2 µmol/g or greater, still more preferably 3 µmol/g or greater. When the terminal vinyl group concentration is the above upper limit value or less, the terminal hydroxy group concentration and the terminal carboxy group concentration relatively increase, and the adhesion to the epoxy-based adhesive tends to further improve. When the terminal vinyl group concentration is the above lower limit value or greater, the terminal hydroxy group concentration and the terminal carboxy group concentration are relatively lowered, reactivity with other resins such as polycarbonate and epoxy resin is suppressed, a thickening effect is small, and the fluidity tends to improve.

When the resin composition of the present embodiment contains two or more polybutylene terephthalate resins, the terminal vinyl group concentration of the mixture is preferably in the above range.

The terminal vinyl group concentration of the polybutylene terephthalate resin is measured according to the description of Examples below.

The polybutylene terephthalate resin having such a terminal vinyl group concentration can be produced by increasing the number of times of thermal history of the polybutylene terephthalate resin, for example, by increasing the number of times of melt-kneading.

The polybutylene terephthalate resin used in the resin composition of the present embodiment is a polyester resin having a structure in which a terephthalic acid unit and a 1,4-butanediol unit are ester-bonded, and contains a polybutylene terephthalate copolymer containing other copolymerization components other than a terephthalic acid unit and a 1,4-butanediol unit, and a mixture of a homopolymer and a polybutylene terephthalate copolymer, in addition to the polybutylene terephthalate resin (homopolymer).

The polybutylene terephthalate resin may contain one or two or more dicarboxylic acid units other than terephthalic acid.

Specific examples of other dicarboxylic acids include aromatic dicarboxylic acids such as isophthalic acid, orthophthalic acid, 1,5-naphthalenedicarboxylic acid, 2,5-naphthalenedicarboxylic acid, 2,6-naphthalenedicarboxylic acid, biphenyl-2,2'-dicarboxylic acid, biphenyl-3,3'-dicarboxylic acid, biphenyl-4,4'-dicarboxylic acid, bis(4,4'-carboxyphenyl)methane, anthracene dicarboxylic acid, and 4,4'-diphenyl ether dicarboxylic acid; alicyclic dicarboxylic acids such as 1,4-cyclohexanedicarboxylic acid and 4,4'-dicyclohexyldicarboxylic acid; and aliphatic dicarboxylic acids such as adipic acid, sebacic acid, azelaic acid, and dimer acid.

In the polybutylene terephthalate resin used in the present embodiment, the terephthalic acid unit preferably accounts for 80 mol% or greater, more preferably 90 mol% or greater, still more preferably 95 mol% or greater, and may be 99 mol% or greater of all the dicarboxylic acid units.

The diol unit may contain one or two or more other diol units in addition to 1,4-butanediol.

Specific examples of the other diol unit include aliphatic or alicyclic diols having from 2 to 20 carbon atoms and bisphenol derivatives. Specific examples thereof include ethylene glycol, propylene glycol, 1,5-pentanediol, 1,6-hexanediol, neopentyl glycol, decamethylene glycol, cyclohexanedimethanol, 4,4'-dicyclohexylhydroxymethane, 4,4'-dicyclohexylhydroxypropane, and an ethylene oxide-added diol of bisphenol A. In addition to bifunctional monomers like those described above, a small amount of a trifunctional monomer such as trimellitic acid, trimesic acid, pyromellitic acid, pentaerythritol, or trimethylolpropane may be used in combination to introduce a branched structure, or a small amount of a monofunctional compound such as a fatty acid for adjusting the molecular weight may be used in combination.

In the polybutylene terephthalate resin used in the present embodiment, the 1,4-butanediol unit preferably accounts for 80 mol% or greater, more preferably 90 mol% or greater, still more preferably 95 mol% or greater, and may be 99 mol% or greater of all the diol units.

As described above, the polybutylene terephthalate resin is preferably a polybutylene terephthalate homopolymer produced by polycondensation of terephthalic acid and 1,4-butanediol. The polybutylene terephthalate resin may be a polybutylene terephthalate copolymer containing one or more dicarboxylic acids other than the terephthalic acid as the carboxylic acid unit and/or one or more diols other than the 1,4-butanediol as the diol unit. When the polybutylene terephthalate resin is a polybutylene terephthalate resin modified by copolymerization, specific examples of preferred copolymers thereof include a polyester ether resin produced by copolymerizing polyalkylene glycols, particularly, polytetramethylene glycol, a dimer acid-copolymerized polybutylene terephthalate resin, and an isophthalic acid-copolymerized polybutylene terephthalate resin. Among them, it is preferable to use a polyester ether resin produced by copolymerizing polytetramethylene glycol.

When the polybutylene terephthalate resin is a copolymer, the copolymer refers to a copolymer having a copolymerization amount of 1 mol% or greater and less than 50 mol% in all units of the polybutylene terephthalate resin. Among them, the copolymerization amount is preferably 2 mol% or greater and less than 50 mol%, more preferably from 3 to 40 mol%, and still more preferably from 5 to 20 mol%. Such a copolymerization ratio is preferable because a molded article having a small molding shrinkage rate and high impact resistance can be produced.

The polybutylene terephthalate resin used in the present embodiment preferably has a high dispersion degree. When the dispersion degree is high, an amount of the end group (particularly, an amount of terminal hydroxy groups and/or an amount of terminal carboxy groups) of the polybutylene terephthalate resin increases, and the adhesion to the epoxy-based adhesive can be further improved.

The Mw/Mn of the polybutylene terephthalate resin is preferably 2.1 or greater, more preferably 2.2 or greater, still more preferably 2.3 or greater, and preferably 3.5 or less, more preferably 3.0 or less, still more preferably 2.7 or less, even more preferably 2.6 or less, and further more preferably 2.5 or less. When the Mw/Mn is equal to or greater than the above lower limit value, the adhesive strength to the epoxy-based adhesive tends to further improve. When the Mw/Mn is equal to or less than the above upper limit value, the effect of suppressing transesterification and the mechanical strength tend to further improve.

Such a polybutylene terephthalate resin having a high dispersion degree can be produced by increasing the number of times of thermal history of the polybutylene terephthalate resin, for example, by increasing the number of times of melt-kneading and by blending two or more polybutylene terephthalate resins having different average molecular weights.

The number average molecular weight (Mn) of the polybutylene terephthalate resin used in the present embodiment is preferably 2500 or greater, more preferably 3000 or greater, still more preferably 3500 or greater, even more preferably 3700 or greater, further more preferably 4000 or greater, and preferably 20000 or less, more preferably 18000 or less, still more preferably 14000 or less, even more preferably 10000 or less, and further more preferably 6000 or less. When the number average molecular weight is equal to or greater than the above lower limit value, the mechanical strength tends to be excellent. When the number average molecular weight is equal to or less than the above upper limit value, the fluidity of the resin tends to improve.

The weight average molecular weight (Mw) of the polybutylene terephthalate resin used in the present embodiment is preferably 5000 or greater, more preferably 6000 or greater, still more preferably 7000 or greater, even more preferably 8000 or greater, further more preferably 9500 or greater, and preferably 40000 or less, more preferably 35000 or less, still more preferably 30000 or less, even more preferably 25000 or less, further more preferably 20000 or less. When the weight average molecular weight is equal to or greater than the above lower limit value, the mechanical strength tends to further improve. When the weigh average molecular weight is equal to or less than the above upper limit value, the fluidity of the resin tends to improve.

The number average molecular weight and the weight average molecular weight of the polybutylene terephthalate resin are measured according to the description of Examples below.

The melting point (Tm) of the polybutylene terephthalate resin used in the present embodiment as measured according to DSC is preferably 200°C or higher, more preferably 205°C or higher, still more preferably 210°C or higher, even more preferably 215°C or higher, further more preferably 220°C or higher, and preferably 280°C or lower, more preferably 270°C or lower, still more preferably 260°C or lower, even more preferably 255°C or lower, further more preferably 240°C or lower. When the melting point is equal to or higher than the above lower limit value, the heat resistance tends to further improve. When the melting point is equal to or lower than the above upper limit value, the molding cycle tends to further improve.

In a case in which the resin composition of the present embodiment contains two or more polyalkylene terephthalate resins, the melting point is the melting point of the mixture. When a plurality of peaks of the melting point are detected, at least one of the plurality of melting points may be included in the range of the lower limit value or higher and the upper limit value or lower; however, it is preferable that a component having a high content among the plurality of melting points be included in the range of the lower limit value or higher and the upper limit value or lower, and it is more preferable that all of the plurality of melting points be included in the range of the lower limit value or higher and the upper limit value or lower.

The crystallization temperature (Tc) of the polybutylene terephthalate resin used in the present embodiment as measured according to DSC is preferably 130°C or higher, more preferably 145°C or higher, still more preferably 160°C or higher, even more preferably 175°C or higher, further more preferably 190°C or higher, and preferably 240°C or lower, more preferably 230°C or lower, still more preferably 220°C or lower, even more preferably 210°C or lower, further more preferably 200°C or lower. When the crystallization temperature is equal to or higher than the above lower limit value, a solidification speed tends to improve, and the molding cycle tends to further improve. When the crystallization temperature is equal to or lower than the above upper limit value, the appearance of the molded article tends to improve.

In a case in which the resin composition of the present embodiment contains two or more polyalkylene terephthalate resins, the crystallization temperature is the crystallization temperature of the mixture. When a plurality of peaks of the crystallization temperature are detected, at least one of the plurality of crystallization temperatures may be included in the range of the lower limit value or higher and the upper limit value or lower; however, it is preferable that the crystallization temperature of a component having a high content among the plurality of crystallization temperatures is included in the range of the lower limit value or higher and the upper limit value or lower, and it is more preferable that all of the plurality of crystallization temperatures are included in the range of the lower limit value or higher and the upper limit value or lower.

The Tm and Tc of the polyalkylene terephthalate resin are measured according to the description of Examples below.

In particular, it is preferable that the polybutylene terephthalate resin used in the present embodiment have a dicarboxylic acid unit and a diol unit, 80 mol% or greater (preferably 90 mol% or greater, more preferably 95 mol% or greater, and still more preferably 99 mol% or greater) of all the dicarboxylic acid units be each a terephthalic acid unit derived from a fossil resource, and 80 mol% or greater (preferably 90 mol% or greater, more preferably 95 mol% or greater, and still more preferably 99 mol% or greater) of all the diol units be each a 1,4-butanediol unit derived from a fossil resource.

The polybutylene terephthalate resin used in the present embodiment is preferably not a biopolybutylene terephthalate resin. An example of the biopolybutylene terephthalate resin is a polybutylene terephthalate resin as a bio-derived raw material in an amount of 10 mass% or greater, 30 mass% or greater, and 90 mass% or less, 60 mass% or less of the total amount of dicarboxylic acid and diol as raw materials of the polybutylene terephthalate resin.

The polybutylene terephthalate resin used in the present embodiment may be a recycled product.

Examples of the recycled polybutylene terephthalate resin include a product produced by material recycling in which a molded article or the like of a used polybutylene terephthalate resin is collected, pulverized, cleaned, and reused, and a product produced by chemical recycling (chemical decomposition method). In the present embodiment, it is preferable to contain a polybutylene terephthalate resin derived from material recycling.

In the polybutylene terephthalate resin derived from material recycling, an alkali component may be mixed in a process of using the resin as a product, a cleaning process at the time of recycling, or another process. It is presumed that when such an alkali component is mixed into the polybutylene terephthalate resin, the titanium catalytic activity in the polybutylene terephthalate resin is reduced.

In the present embodiment, in particular, a recycled product of a polybutylene terephthalate resin having a large number of times of thermal history can be used. Examples of the thermal history include melt-kneading, and thermoforming such as injection molding and extrusion molding. In the present embodiment, the polybutylene terephthalate resin having a thermal history of from 3 to 10 times is exemplified.

Examples of such recycled products include recycled products derived from extruded parts such as connectors, home electric appliances, toothbrushes, fibers, miscellaneous goods, automobile parts, films, and tubes.

The polybutylene terephthalate resin, particularly the recycled polybutylene terephthalate resin may contain a metal element as an impurity. This is also derived from a reaction vessel, and a cutter in pulverization, pelletization, and the like.

An amount of an iron element in the polybutylene terephthalate resin used in the present embodiment is preferably 0.1 µg/g or greater, and preferably 100 µg/g or less, more preferably 70 µg/g or less, still more preferably 50 µg/g or less, even more preferably 10 µg/g or less, and further more preferably 5 µg/g or less.

An amount of an aluminum element in the polybutylene terephthalate resin used in the present embodiment is preferably 0.1 µg/g or greater, and preferably 100 µg/g or less, more preferably 70 µg/g or less, still more preferably 50 µg/g or less, even more preferably 10 µg/g or less, and further more preferably 5 µg/g or less.

The amount of iron element and the amount of aluminum element in the polybutylene terephthalate resin are measured according to the method described in Examples below.

The content of the polybutylene terephthalate resin in the resin composition of the present embodiment is preferably 30 mass% or greater, more preferably 35 mass% or greater, still more preferably 40 mass% or greater, even more preferably 45 mass% or greater, and preferably 85 mass% or less, more preferably 80 mass% or less, still more preferably 75 mass% or less, in 100 mass% of the resin composition, and is preferably 60 mass% or less, more preferably 55 mass% or less, still more preferably 50 mass% or less, depending on the intended use and the like. When the content is equal to or greater than the above lower limit value, the heat resistance of the resulting molded article tends to further improve. When the content is equal to or less than the above upper limit value, the shrinkage ratio of the resulting molded article tends to decrease.

The resin composition of the present embodiment may contain only one type of the polybutylene terephthalate resin or may contain two or more types thereof. In a case in which two or more types are contained, the total amount thereof is preferably within the above range.

### Amorphous Thermoplastic resin Having Carbonate Bond and/or Ester Bond

The resin composition of the present embodiment contains the amorphous thermoplastic resin having a carbonate bond and/or an ester bond. By blending the amorphous resin, the crystallization temperature Tc of the resulting resin composition at the time of temperature decrease can be increased. In particular, in the resin composition of the present embodiment, even when an amorphous thermoplastic resin having a carbonate bond and/or an ester bond to be blended with the polybutylene terephthalate resin is blended, transesterification can be effectively suppressed.

Examples of the amorphous thermoplastic resin having a carbonate bond and/or an ester bond include a polycarbonate resin, a polyarylate resin, an isophthalic acid copolymerized polyethylene terephthalate resin, and a cyclohexanedimethanol copolymerized polyethylene terephthalate resin, and a polycarbonate resin is preferable.

Polycarbonate resins are thermoplastic polymers or copolymers, which may be branched, produced by reacting a dihydroxy compound or a dihydroxy compound and a small amount of a polyhydroxy compound with phosgene or a carbonic acid diester.

The dihydroxy compound as a raw material is preferably an aromatic dihydroxy compound. Specific examples thereof include 2,2-bis(4-hydroxyphenyl)propane (i.e., bisphenol A), 4,4'-isopropylidenebis(2-methyl-phenol) (i.e., bisphenol C), tetramethylbisphenol A, bis(4-hydroxyphenyl)-p-diisopropylbenzene, hydroquinone, resorcinol, and 4,4-dihydroxydiphenyl, and bisphenol A is preferable. Further, a compound in which one or more tetraalkylphosphonium sulfonates are bonded to the aromatic dihydroxy compound described above may also be used.

In the polycarbonate resin used in the present embodiment, 90 mass% or greater (preferably 95 mass% or greater) of the constituent unit is preferably a constituent unit derived from an aromatic hydroxy compound, more preferably a constituent unit derived from bisphenol A and/or bisphenol C, and still more preferably a constituent unit derived from bisphenol A.

To adjust the molecular weight of the polycarbonate resin, a monovalent aromatic hydroxy compound may be used, and examples thereof include m- and p-methylphenols, m- and p-propylphenols, p-tert-butylphenol, and p-long-chain alkyl-substituted phenols.

The viscosity average molecular weight (Mv) of the polycarbonate resin is preferably 10000 or greater, more preferably 12000 or greater, still more preferably 13000 or greater, and particularly preferably greater than 14000. When a polycarbonate resin having a viscosity average molecular weight of less than 10000 is used, the resulting resin composition tends to have low mechanical strength such as impact resistance. The Mv is preferably 60000 or less, more preferably 40000 or less, still more preferably 35000 or less, and even still more preferably 30000 or less, and may be 25000 or less or 20000 or less. When the MV is higher than 60000, the fluidity of the resin composition may be deteriorated, and moldability may be deteriorated.

In the present invention, the viscosity average molecular weight (Mv) of the polycarbonate resin is a value calculated from the following Schnell's viscosity equation by measuring the viscosity of a methylene chloride solution of the polycarbonate resin at 25°C using an Ubbelohde viscometer to determine an intrinsic viscosity ([η]). $\left[η\right] = 1.23 \times {10}^{- 4} {Mv}^{0.83}$

A melt mass flow rate (MFR) of the polycarbonate resin measured in accordance with JIS K7210 (temperature: 300°C, load: 1.20 kgf) is preferably 3 g/10 minutes or greater, more preferably 6 g/10 minutes or greater, and is preferably 100 g/10 minutes or less, more preferably 70 g/10 minutes or less. When the MFR is within the above range, the effects of the present invention tend to be more effectively exhibited.

The melt volume rate (MVR) of the polycarbonate resins, as measured in accordance with JIS K7210 (temperature: 300°C, load: 1.20 kgf), is preferably from 0.5 to 20 cm³ g/10 min, and more preferably from 1 to 10 cm³/10 min. When the MVR is within the above range, the effects of the present invention tend to be more effectively exhibited.

The method for producing the polycarbonate resin is not particularly limited, and a polycarbonate resin produced by any of a phosgene method (interfacial polymerization method) and a melting method (transesterification method) can also be used. Further, the polycarbonate resin produced by a melting method may be subjected to a post-treatment for adjusting the amount of terminal OH groups and the resulting polycarbonate resin is also preferred.

The polycarbonate resin may be a recycled polycarbonate resin.

Examples of the recycled polycarbonate resin include those produced by material recycling in which a used polycarbonate resin molded article is collected, pulverized, washed, and reused, those produced by chemical recycling (chemical decomposition method), and those produced by mechanical recycling.

Chemical recycling is a method in which a used polycarbonate resin molded article is collected, chemically decomposed and returned to the raw material level for resynthesizing the polycarbonate resin. On the other hand, mechanical recycling is a technique that makes it possible to more reliably remove stains on a polycarbonate resin molded article than material recycling by more strictly performing alkali cleaning in the above-described material recycling or performing vacuum drying at a high temperature.

For example, after foreign matters are removed from the used polycarbonate resin molded article, the residue of the used polycarbonate resin molded article is pulverized and washed, and then pelletized by an extruder to produce a recycled polycarbonate resin.

The content of the amorphous thermoplastic resin having a carbonate bond and/or an ester bond in the resin composition of the present embodiment is preferably 5 parts by mass or greater, more preferably 10 parts by mass or greater, still more preferably 15 parts by mass or greater, even more preferably 20 parts by mass or greater, further more preferably 25 parts by mass or greater, and preferably 55 parts by mass or less, more preferably 50 parts by mass or less, still more preferably 45 parts by mass or less, even more preferably 40 parts by mass or less, further more preferably 35 parts by mass or less, with respect to 100 parts by mass of the total of the polybutylene terephthalate resin and the amorphous thermoplastic resin having a carbonate bond and/or an ester bond. When the content is equal to or greater than the above lower limit value, the shrinkage ratio of the resulting molded article tends to decrease. When the content is equal to or less than the above upper limit value, the heat resistance of the resulting molded article tends to be further improved.

The resin composition of the present embodiment may contain only one type or two or more types of amorphous thermoplastic resins having a carbonate bond and/or an ester bond. In a case in which two or more types are contained, the total amount thereof is preferably within the above range.

The content of the polycarbonate resin in the resin composition of the present embodiment is preferably 5 parts by mass or greater, more preferably 7 parts by mass or greater, still more preferably 10 parts by mass or greater, and preferably 25 parts by mass or less, more preferably 20 parts by mass or less, with respect to 100 parts by mass of the total of the polybutylene terephthalate resin and the polystyrene-based resin. When the content is equal to or greater than the above lower limit value, the mechanical properties such as tensile strength of the molded article tend to further improve. When the content is equal to or less than the above upper limit value, the heat resistance of the molded article tends to further improve.

The resin composition of the present embodiment may contain only one type of polycarbonate resin, or may contain two or more types of polycarbonate resins. **In** a case in which two or more types are contained, the total amount thereof is preferably within the above range.

### Polystyrene-Based Resin

The resin composition of the present embodiment contains the polystyrene-based resin. By containing the polystyrene-based resin, warpage of the resulting molded article can be effectively suppressed. The polystyrene-based resin may be a crystalline resin or an amorphous resin.

Examples of the polystyrene-based resin in the present embodiment include a homopolymer of a styrene-based monomer, and a copolymer of a styrene-based monomer and a monomer copolymerizable with the styrene-based monomer. **In** the copolymer of a styrene-based monomer and a copolymerizable monomer, the styrene-based monomer preferably accounts for 50 mass% or greater, more preferably 60 mass% or greater, and preferably 100 mass% or less of the total monomer.

The styrene-based monomer means styrene and styrene having a substituent, and examples thereof include styrene, α-methylstyrene, p-methylstyrene, vinylxylene, ethylstyrene, dimethylstyrene, p-tert-butylstyrene, vinylnaphthalene, methoxystyrene, monobromostyrene, dibromostyrene, fluorostyrene, and tribromostyrene, and styrene and α-methylstyrene are more preferable, and styrene is particularly preferable.

Examples of monomers other than the styrene-based monomer among the monomers constituting the polystyrene-based resin include (meth)acrylic acid ester-based monomers, maleimide-based monomers such as maleimide, N-methylmaleimide, and N-phenylmaleimide, α,β-unsaturated carboxylic acids and anhydrides thereof, such as acrylic acid, methacrylic acid, maleic acid, maleic anhydride, phthalic acid, and itaconic acid, and rubbers such as butadiene.

The polystyrene-based resin used in the present embodiment may contain a rubber-reinforced polystyrene resin. Specific examples of the rubber-reinforced polystyrene resin include resins such as an acrylonitrile-styrene copolymer (AS resin), a high impact polystyrene resin (HIPS), an acrylonitrile-butadiene-styrene copolymer (ABS resin), an acrylonitrile-acrylic rubber-styrene copolymer (AAS resin), an acrylonitrile-styrene-acrylic rubber copolymer (ASA resin), an acrylonitrile-ethylene propylene-based rubber-styrene copolymer (AES resin), and a styrene-IPN type rubber copolymer.

Also, a portion of the polystyrene-based resin used in the present embodiment is preferably a styrene-maleic acid polymer (preferably a styrene-maleic anhydride polymer). The styrene-maleic acid polymer serves as a compatibilizer between the polybutylene terephthalate resin and the polystyrene resin and/or the rubber-reinforced polystyrene resin. As a result, the strength of the resulting molded article can be enhanced.

In the present embodiment, the polystyrene-based resin preferably contains at least one selected from the group consisting of a polystyrene resin (GPPS), an acrylonitrile-styrene copolymer (AS resin), a high-impact polystyrene resin (HIPS), an acrylonitrile-butadiene-styrene copolymer (ABS resin), an acrylonitrile-acrylic rubber-styrene copolymer (AAS resin), an acrylonitrile-styrene-acrylic rubber copolymer (ASA resin), and an acrylonitrile-ethylene propylene-based rubber-styrene copolymer (AES resin), and more preferably contains a high-impact polystyrene resin (HIPS). In addition, from the viewpoint of the heat resistance, a polystyrene resin (GPPS) or an acrylonitrile-styrene copolymer (AS resin) is more preferable, and a polystyrene resin (GPPS) is still more preferable.

The polystyrene-based resin used in the present embodiment may contain a recycled product.

Examples of the recycled polystyrene-based resin include a leftover material or a rejected product of a molded article, a product produced by material recycling in which a used polystyrene-based resin molded article is collected, pulverized, cleaned, and reused, and a product produced by chemical recycling (chemical decomposition method).

The content of the polystyrene-based resin in the resin composition of the present embodiment is preferably 30 parts by mass or greater, more preferably 35 parts by mass or greater, still more preferably 40 parts by mass or greater, even more preferably 45 parts by mass or greater, further more preferably greater than 50 parts by mass, and preferably 70 parts by mass or less, more preferably 65 parts by mass or less, still more preferably 60 parts by mass or less, with respect to 100 parts by mass of the total of the polybutylene terephthalate resin and the polystyrene-based resin. When the content is equal to or greater than the above lower limit value, the shrinkage ratio of the molded article tends to decrease. When the content is equal to or less than the above upper limit value, the heat resistance of the molded article tends to further improve.

The resin composition of the present embodiment may contain only one type of polystyrene-based resin, or may contain two or more types of polystyrene-based resins. **In** a case in which two or more types are contained, the total amount thereof is preferably within the above range.

### Other Thermoplastic Resin

The resin composition of the present embodiment may contain a thermoplastic resin other than the above thermoplastic resin.

Such a thermoplastic resin may be a crystalline thermoplastic resin or an amorphous thermoplastic resin, and is preferably an amorphous thermoplastic resin.

Examples of the crystalline thermoplastic resin include a polyethylene terephthalate resin, a polyethylene resin, a polypropylene resin, a polyamide resin, and a polyacetal resin, and a polyethylene terephthalate resin is preferable.

A first example of a preferred blend form of the thermoplastic resin in the present embodiment is that, in the resin composition, the polybutylene terephthalate resin and the polycarbonate resin account for 90 mass% or greater (preferably 95 mass% or greater, and preferably 100 mass% or less) of the thermoplastic resin contained in the resin composition.

A second example of a preferred blend form of the thermoplastic resin in the present embodiment is that, in the resin composition, the polybutylene terephthalate resin, the polycarbonate resin, and the polystyrene resin account for 90 mass% or greater (preferably 95 mass% or greater, and preferably 100 mass% or less) of the thermoplastic resin contained in the resin composition.

A third example of a preferred blend form of the thermoplastic resin in the present embodiment is that, in the resin composition, the polybutylene terephthalate resin and the polystyrene-based resin account for 90 mass% or greater (preferably 95 mass% or greater, and preferably 100 mass% or less) of the thermoplastic resin contained in the resin composition.

A fourth example of a preferred blend form of the thermoplastic resin in the present embodiment is that, in the resin composition, the polybutylene terephthalate resin, the polycarbonate resin, and the polystyrene resin account for 90 mass% or greater (preferably 95 mass% or greater, and preferably 100 mass% or less) of the thermoplastic resin contained in the resin composition.

### Reactive Compound

The resin composition of the present embodiment may contain a reactive compound. By containing the reactive compound, the mechanical strength of the molded article is improved, and a resin composition excellent in hydrolysis resistance is produced. **In** the resin composition of the present embodiment, even when a reactive compound is blended in the resin composition, thickening of the resin composition tends to be effectively suppressed. As a result, the transparency of the resulting molded article tends to be maintained high.

The reactive compound used in the present embodiment preferably contains at least one selected from the group consisting of a compound having an epoxy group, a carbodiimide compound, a compound having an oxazoline group, and a compound having an oxazine group, and more preferably contains a compound having an epoxy group.

In particular, the resin composition of the present embodiment may contain an epoxy compound. When the epoxy compound is contained, the hydrolysis resistance of the resulting molded article tends to improve, and adhesion to the epoxy-based adhesive tends to improve, which is preferable.

### Compound Having Epoxy Group (Epoxy Resin)

The compound having an epoxy group is a compound having one or more epoxy groups per molecule, examples thereof include a glycidyl compound, an aromatic ring-containing compound having an epoxy group, and an alicyclic compound having an epoxy group, and it is preferable to include at least an aromatic ring-containing compound having an epoxy group.

The epoxy compound may be a monofunctional epoxy compound or a polyfunctional epoxy compound, and a polyfunctional epoxy compound is preferable.

Specific examples of the compound having an epoxy group include bisphenol A type epoxy compounds (including bisphenol A diglycidyl ether), bisphenol F type epoxy compounds (including bisphenol F diglycidyl ether), biphenyl type epoxy compounds (including bis(glycidyloxy)biphenyl), resorcin type epoxy compounds (including resorcinol diglycidyl ether), novolac type epoxy compounds, epoxy compounds having an aromatic ring, such as benzoic acid glycidyl ester, terephthalic acid diglycidyl ester, or orthophthalic acid diglycidyl ester, (di)glycidyl ethers such as methyl glycidyl ether, butyl glycidyl ether, 2-ethylhexyl glycidyl ether, decyl glycidyl ether, stearyl glycidyl ether, phenyl glycidyl ether, butyl phenyl glycidyl ether, allyl glycidyl ether, neopentyl glycol diglycidyl ether, ethylene glycol diglycidyl ether, glycerin diglycidyl ether, and propylene glycol diglycidyl ether, paraffinic (for example, saturated fatty acid-based) or olefinic (for example, unsaturated fatty acid-based) (di)glycidyl esters such as sorbic acid glycidyl ester, adipic acid diglycidyl ester, epoxidized linseed oil, and epoxidized soybean oil, and alicyclic epoxy compounds such as vinylcyclohexene dioxide and dicyclopentadiene oxide.

Among them, a styrene-acrylic copolymer containing a glycidyl group in a side chain, a bisphenol A type epoxy compound, a novolac type epoxy compound, a bisphenol F type epoxy compound, a biphenyl type epoxy compound, and the like are preferable, and a bisphenol A type epoxy compound is more preferable.

The epoxy compound may be a copolymer containing a glycidyl group-containing compound as a constituent component. Examples thereof include a copolymer of a glycidyl ester of an α,β-unsaturated acid and one or more monomers selected from the group consisting of α-olefin, acrylic acid, acrylic acid ester, methacrylic acid, methacrylic acid ester, and styrene.

The epoxy compound is also preferably a copolymer of an epoxy group-containing monomer and a styrene-based monomer, and may be a copolymer with another copolymerizable monomer. Examples of the styrene-based monomer constituting the copolymer of the epoxy group-containing monomer and the styrene-based monomer include glycidyl (meth)acrylate and glycidyl itaconate, and glycidyl methacrylate and glycidyl acrylate are preferable, and glycidyl methacrylate is particularly preferable. Examples of the styrene-based monomer include styrene, α-methylstyrene, p-methylstyrene, vinylxylene, ethylstyrene, dimethylstyrene, p-tert-butylstyrene, vinylnaphthalene, methoxystyrene, monobromostyrene, dibromostyrene, fluorostyrene, and tribromostyrene, styrene and α-methylstyrene are more preferable, and styrene is particularly preferable. As a specific example of the copolymer of the epoxy group-containing monomer and the styrene-based monomer, a glycidyl (meth)acrylate-styrene copolymer, glycidyl (meth)acrylate-styrene-methyl (meth)acrylate, and the like are particularly preferable because the adhesion with an epoxy-based adhesive tends to improve.

The epoxy equivalent of the epoxy compound used in the present embodiment is preferably 100 g/eq or greater, more preferably 150 g/eq or greater, and preferably 1000 g/eq or less, more preferably 300 g/eq or less, still more preferably 250 g/eq or less.

When the resin composition of the present embodiment contains two or more epoxy compounds, the epoxy equivalent is a value (weighted average value) obtained by multiplying the epoxy equivalent of each epoxy compound by a mass fraction of each epoxy compound.

In addition to the above, as the epoxy compound, the description of paragraphs from [0038] to [0050] of JP 2020-199755 A and paragraph [0043] of JP 2020-125468 A can be taken into consideration, the contents of which are incorporated herein by reference.

The content of the reactive compound (preferably, a compound having an epoxy group (epoxy resin)) in the resin composition of the present embodiment is preferably 0.01 mass% or greater, more preferably 0.05 mass% or greater, and still more preferably 0.1 mass% or greater in 100 mass% of the resin composition. When the content is equal to or greater than the above lower limit value, the hydrolysis resistance tends to further improve. The content of the reactive compound (preferably, a compound having an epoxy group (epoxy resin)) is preferably 10.0 mass% or less, more preferably 5.0 mass% or less, still more preferably 3.0 mass% or less, and even more preferably 2.0 mass% or less in the resin composition. When the content is equal to or less than the above upper limit value, the melt viscosity tends to be more stable, and the moldability tends to improve.

When the resin composition of the present embodiment contains an epoxy compound, the content thereof is preferably 0.01 parts by mass or greater, and more preferably 0.05 parts by mass or greater, with respect to 100 parts by mass of the polybutylene terephthalate resin. The upper limit value of the content of the epoxy compound is preferably 15 parts by mass or less, more preferably 10 parts by mass or less, still more preferably 7.0 parts by mass or less, and even more preferably 2.0 parts by mass or less with respect to 100 parts by mass of the polybutylene terephthalate resin.

The resin composition of the present embodiment may contain only one type of reactive compound, or may contain two or more types of reactive compounds. In a case in which two or more types are contained, the total amount thereof is preferably within the above range.

### Stabilizer

The resin composition of the present embodiment may contain a stabilizer. When the stabilizer is contained, a resin composition or molded article having excellent thermal stability is produced.

The stabilizer preferably contains one or more compounds selected from the group consisting of thioether-based compounds, hindered phenol-based compounds, and phosphite-based compounds, and more preferably contains one or more compounds selected from the group consisting of hindered phenol-based compounds and phosphite-based compounds.

As the thioether-based compound, any known sulfur element-containing compound can be used, and among these, thioethers are preferred. When the resin composition of the present embodiment contains a thioether-based compound, the appearance of the molded article tends to be favorable, and changes in color tone tend to be suppressed. Specific examples thereof include didodecyl thiodipropionate, ditetradecyl thiodipropionate, dioctadecyl thiodipropionate, pentaerythritol tetrakis(3-dodecylthiopropionate), 2,2-bis{[3-(dodecylthio)-1-oxopropoxy] methyl} propane-1,3-diyl bis[3-(dodecylthio) propionate], thiobis(N-phenyl-β-naphthylamine), 2-mercaptobenzothiazole, 2-mercaptobenzimidazole, tetramethylthiuram monosulfide, tetramethylthiuram disulfide, nickel dibutyl dithiocarbamate, nickel isopropyl xanthate, and trilauryl trithiophosphite. Among these, 2,2-bis{[3-(dodecylthio)-1-oxopropoxy] methyl} propane-1,3-diyl bis[3-(dodecylthio) propionate] is preferable. Examples of commercially available products thereof include "Seenox 412S" (trade name) available from Shipro Kasei Kaisha, Ltd., and "ADK STAB AO-412S" (trade name) available from ADEKA Corporation.

Examples of the hindered phenol-based compound include pentaerythritol tetrakis(3-(3,5-di-t-butyl-4-hydroxyphenyl) propionate), octadecyl-3-(3,5-di-tert-butyl-4-hydroxyphenyl) propionate, thiodiethylene bis(3-(3,5-di-tert-butyl-4-hydroxyphenyl) propionate), pentaerythritol tetrakis(3-(3,5-di-neopentyl-4-hydroxyphenyl) propionate), and 1,3,5-trimethyl-2,4,6-tris(3,5-di-tert-butyl-4-hydroxybenzyl) benzene. Among these, pentaerythritol tetrakis(3-(3,5-di-tert-butyl-4-hydroxyphenyl)propionate) and octadecyl-3-(3,5-di-tert-butyl-4-hydroxyphenyl)propionate are preferable. Examples of commercially available products include "ADK STAB AO-60" (trade name) and "ADK STAB AO-330" (trade name) available from ADEKA CORPORATION, "EVERNOX-10" (trade name) available from Everspring Chemical Co., Ltd., and "IRGANOX 1010" available from BASF SE.

Preferable examples of the phosphite compound include compounds represented by the following formula:

R²O-P(OR³)(OR⁴)

where R², R³, and R⁴ each represent a hydrogen atom, an alkyl group having from 1 to 30 carbons, or an aryl group having from 6 to 30 carbons, and at least one of R², R³, or R⁴ is an aryl group having from 6 to 30 carbons.

Examples of the phosphite compound include triphenyl phosphite, tris(nonylphenyl) phosphite, dilauryl hydrogen phosphite, triethyl phosphite, tridecyl phosphite, tris(2-ethylhexyl) phosphite, tris(tridecyl) phosphite, tristearyl phosphite, diphenyl monodecyl phosphite, monophenyl didecyl phosphite, diphenyl mono (tridecyl) phosphite, tetraphenyl dipropylene glycol diphosphite, tetraphenyl tetra(tridecyl) pentaerythritol tetraphosphite, a hydrogenated bisphenol A phenol phosphite polymer, diphenyl hydrogen phosphite, 4,4'-butylidene-bis(3-methyl-6-tert-butylphenyl di(tridecyl) phosphite), tetra(tridecyl) 4,4'-isopropylidene diphenyl diphosphite, bis(tridecyl) pentaerythritol diphosphite, bis(nonylphenyl) pentaerythritol diphosphite, dilauryl pentaerythritol diphosphite, distearyl pentaerythritol diphosphite, tris(4-tert-butylphenyl) phosphite, tris(2,4-di-tert-butylphenyl) phosphite, a hydrogenated bisphenol A pentaerythritol phosphite polymer, bis (2,4-di-tert-butylphenyl) pentaerythritol diphosphite, bis(2,6-di-tert-butyl-4-methylphenyl) pentaerythritol diphosphite, 2,2'-methylene bis(4,6-di-tert-butylphenyl) octyl phosphite, and bis(2,4-dicumylphenyl) pentaerythritol diphosphite. Among these, bis(2,6-di-tert-butyl-4-methylphenyl) pentaerythritol diphosphite is preferable. Examples of commercially available products thereof include "ADK STAB PEP-36" (trade name) and "AX-71" (trade name) available from ADEKA Corporation.

In addition, as the stabilizer, specifically, the description in paragraphs [0067] to [0075] of JP 2021-063196 A, the description in paragraphs [0046] to [0057] of JP 2018-070722 A, the description in paragraphs [0030] to [0037] of JP 2019-056035 A, and the description in paragraphs [0066] to [0078] of WO 2017/038949 can be referred to, and the contents of which are incorporated herein by reference.

The content of the stabilizer in the resin composition of the present embodiment is, for example, 0.01 parts by mass or greater, preferably 0.05 parts by mass or greater, more preferably 0.1 parts by mass or greater, and still more preferably 0.3 parts by mass or greater with respect to 100 parts by mass of the thermoplastic resin contained in the resin composition. When the content is equal to or greater than the above lower limit value, the effect of suppressing thermal deterioration or oxidative deterioration of the resin during melt-kneading, during molding, and furthermore during use as a molded article tends to further improve, and discoloration of the resin tends to be more effectively suppressed. The upper limit value of the content of the stabilizer is preferably 3.0 parts by mass or less, more preferably 2.0 parts by mass or less, and still more preferably 1.0 parts by mass or less, with respect to 100 parts by mass of the total of the polybutylene terephthalate resin and the polyethylene terephthalate resin, and may be 0.8 parts by mass or less, 0.6 parts by mass or less, 0.5 parts by mass or less, or 0.4 parts by mass or less, depending on the intended use and the like. When the content is equal to or less than the above upper limit value, adverse effects on the appearance and physical properties due to such a factor as aggregation of additives such as a stabilizer can be effectively suppressed.

One example of 100 parts by mass of the thermoplastic resin contained in the resin composition is 100 parts by mass in total of the polybutylene terephthalate resin and the amorphous thermoplastic resin having a carbonate bond and/or an ester bond.

Another example of 100 parts by mass of the thermoplastic resin contained in the resin composition is 100 parts by mass in total of the polybutylene terephthalate resin and the polystyrene-based resin.

Another example of 100 parts by mass of the thermoplastic resin contained in the resin composition is 100 parts by mass of the polybutylene terephthalate resin.

The resin composition of the present embodiment may contain only one type of stabilizer or two or more types of stabilizers. **In** a case in which two or more types are contained, the total amount thereof is preferably within the above range.

### Inorganic filler

The resin composition of the present embodiment preferably further contains an inorganic filler. The inorganic filler is preferably a fibrous or scaly inorganic filler, more preferably glass fiber and/or flaky glass. By containing such an inorganic filler, the mechanical strength of the resulting molded article tends to improve.

The inorganic filler that can be contained in the resin composition of the present embodiment has an effect of improving the mechanical properties of the resin composition produced by blending the inorganic filler in the resin, and a common inorganic filler for plastics can be used. Preferably, fibrous inorganic fillers such as glass fibers, carbon fibers, basalt fibers, wollastonite, and potassium titanate fibers can be used. A particulate or amorphous filler such as calcium carbonate, titanium oxide, feldspar mineral, clay, organic clay, and glass bead; a plate-shaped filler such as talc; and a scaly inorganic filler such as flaky glass, mica, or graphite can also be used. Among them, from the viewpoint of mechanical strength, rigidity, and heat resistance, glass fiber and/or flaky glass are preferably contained, and glass fiber is particularly preferably used. As the glass fiber, either a round cross-sectional shape or an irregular cross-sectional shape can be used.

The inorganic filler is more preferably surface-treated with a surface treatment agent such as a coupling agent. The glass fiber to which the surface treatment agent is attached is preferable because it is excellent in durability, wet heat resistance, hydrolysis resistance, and heat shock resistance.

As the surface treatment agent, any known surface treatment agent can be used, and specific examples thereof preferably include silane coupling agents such as aminosilane-based, epoxysilane-based, allylsilane-based, and vinyl silane-based silane coupling agents. Among them, the aminosilane-based surface treatment agent is preferable, and preferred specific examples thereof include γ-aminopropyltriethoxysilane, γ-aminopropyltrimethoxysilane, and γ-(2-aminoethyl)aminopropyltrimethoxysilane.

As other surface treatment agents, an epoxy resin-based surface treatment agent such as a novolac type, an epoxy resin-based surface treatment agent of bisphenol A type, and the like are also preferable, and in particular, treatment with a novolac type epoxy resin-based surface treatment agent is preferable.

For each of the silane-based surface treatment agent and the epoxy resin-based surface treatment agent, one type may be used alone or two or more types may be used in combination, and it is also preferable to use both of the silane-based surface treatment agent and the epoxy resin-based surface treatment agent in combination. The glass fiber in the present embodiment means a fibrous glass material, and more specifically, a chopped shape in which from 1000 to 10000 glass fibers are bundled and cut to a predetermined length is preferable.

The glass fiber in the present embodiment preferably has a number average fiber length of from 0.5 to 10 mm, and more preferably has a number average fiber length of from 1 to 5 mm. By using the glass fibers having such a number average fiber length, the mechanical strength can be further improved. For the number average fiber length, glass fibers to be measured for fiber length are randomly extracted from an image obtained by observation with an optical microscope, the long sides of the glass fibers are measured, and the number average fiber length is calculated from the obtained measured values. The magnification of the observation is 20 times, and the number of the measurement is 1000 or greater. The value generally corresponds to a cut length.

The cross section of the glass fiber may be any shape such as a circular shape, an elliptical shape, an oval shape, a rectangular shape, a shape in which a semicircle is combined with both short sides of a rectangle, and a cocoon-like shape, and is preferably a circular shape. The circular shape here is intended to include what is usually referred to as a circular shape in the technical field of the present embodiment in addition to a circular shape in a geometric sense.

The lower limit of the number average fiber diameter of the glass fiber is preferably 4.0 µm or greater, more preferably 4.5 µm or greater, and still more preferably 5.0 µm or greater. The upper limit of the number average fiber diameter of the glass fiber is preferably 15.0 µm or less, and more preferably 14.0 µm or less. By using the glass fiber having a number average fiber diameter in such a range, a molded article having more excellent mechanical strength tends to be produced. The number average fiber diameter of the glass fiber is calculated from a measured value obtained by randomly extracting the glass fiber whose fiber diameter is to be measured from an image obtained by observation with an electron microscope, and measuring the fiber diameter at a position close to the central portion. The magnification of the observation is 1000 times, and the number of the measurement is 1000 or greater. The number average fiber diameter of the glass fiber having a cross section other than a circular cross section is the number average fiber diameter when converted into a circle having the same area as the area of the cross section.

As the glass fiber, a fiber obtained by melt-spinning a commonly supplied glass such as E glass (Electrical glass), C glass (Chemical glass), A glass (Alkali glass), S glass (High strength glass), D glass, R glass, and alkali-resistant glass is used, and the glass material is not particularly limited, and any glass can be used as long as it can be formed into a glass fiber. In the present embodiment, E glass is preferably included.

The glass fiber used in the present embodiment is preferably surface-treated with a surface treatment agent such as a silane coupling agent such as γ-methacryloxypropyltrimethoxysilane, γ-glycidoxypropyltrimethoxysilane, and γ-aminopropyltriethoxysilane. The attachment amount of the surface treatment agent is preferably from 0.01 to 1 mass% of the glass fiber. Further, if necessary, glass fibers that are surface-treated with a lubricant such as a fatty acid amide compound or silicone oil, an antistatic agent such as a quaternary ammonium salt, a resin having a film-forming ability such as an epoxy resin or a urethane resin, or a mixture of a resin having a film-forming ability and a heat stabilizer may be used.

As the glass fibers, a commercially available product can be procured. Examples of commercially available products include T-286H, T-756H, T-127, and T-289H available from Nippon Electric Glass Co., Ltd., DEFT2A available from Owens Corning, HP3540 available from PPG Industries, Inc., and CSG3PA820 available from Nitto Boseki Co., Ltd.

The content of the inorganic filler (preferably glass fiber) in the resin composition of the present embodiment is preferably 10 parts by mass or greater, more preferably 15 parts by mass or greater, still more preferably 20 parts by mass or greater, even more preferably 25 parts by mass or greater, and further more preferably 30 parts by mass or greater, with respect to 100 parts by mass of the thermoplastic resin contained in the resin composition of the present embodiment. When the content is equal to or greater than the above lower limit value, the mechanical strength of the resulting molded article tends to increase. The upper limit value of the content of the inorganic filler is preferably 150 parts by mass or less, more preferably 140 parts by mass or less, still more preferably 120 parts by mass or less, even more preferably 100 parts by mass or less, further more preferably 80 parts by mass or less, with respect to 100 parts by mass of the thermoplastic resin contained in the resin composition, and is preferably 70 parts by mass or less, more preferably 60 parts by mass or less, still more preferably 50 parts by mass or less depending on the intended use and the like. When the content is equal to or less than the above upper limit value, weld strength of an interface portion tends to increase.

One example of 100 parts by mass of the thermoplastic resin contained in the resin composition is 100 parts by mass in total of the polybutylene terephthalate resin and the amorphous thermoplastic resin having a carbonate bond and/or an ester bond.

Another example of 100 parts by mass of the thermoplastic resin contained in the resin composition is 100 parts by mass in total of the polybutylene terephthalate resin and the polystyrene-based resin.

Another example of 100 parts by mass of the thermoplastic resin contained in the resin composition is 100 parts by mass of the polybutylene terephthalate resin.

The resin composition of the present embodiment may contain only one type of stabilizer or two or more types of stabilizers. In a case in which two or more types are contained, the total amount thereof is preferably within the above range.

The content of the inorganic filler (preferably glass fiber) in the resin composition of the present embodiment is, for example, 10 mass% or greater, preferably 15 mass% or greater of the resin composition, and preferably 20 mass% or greater, more preferably 25 mass% or greater depending on the intended use and the like. The content of the inorganic filler (preferably glass fiber) is, for example, 60 mass% or less, preferably 55 mass% or less, and preferably 45 mass% or less, more preferably 40 mass% or less, and more preferably 38 mass% or less, depending on the intended use and the like.

The resin composition of the present embodiment may contain only one type of inorganic filler (preferably glass fiber) or two or more types of inorganic fillers. **In** a case in which two or more types are contained, the total amount thereof is preferably within the above range.

### Release Agent

The resin composition of the present embodiment preferably contains a release agent.

As the release agent, a known release agent can be widely used, and examples thereof include aliphatic carboxylic acid amide-based release agents, aliphatic carboxylic acids, esters of aliphatic carboxylic acids and alcohols, aliphatic hydrocarbon compounds having a number average molecular weight of from 200 to 15000, and polysiloxane-based silicone oils, and aliphatic hydrocarbon having a number average molecular weight of from 200 to 15000 is preferable.

Examples of the aliphatic carboxylic acid amide-based release agent include compounds produced by a dehydration reaction of a higher aliphatic monocarboxylic acid and/or a polybasic acid with a diamine.

As the higher aliphatic monocarboxylic acid, saturated aliphatic monocarboxylic acids and hydroxycarboxylic acids having 16 or more carbons are preferable, and examples thereof include palmitic acid, stearic acid, behenic acid, montanic acid, and 12-hydroxystearic acid.

Examples of the polybasic acid include aliphatic dicarboxylic acids such as malonic acid, succinic acid, adipic acid, sebacic acid, pimelic acid, and azelaic acid, aromatic dicarboxylic acids such as phthalic acid and terephthalic acid, and alicyclic dicarboxylic acids such as cyclohexane dicarboxylic acid and cyclohexyl succinic acid.

Examples of the diamine include ethylenediamine, 1,3-diaminopropane, 1,4-diaminobutane, hexamethylenediamine, meta-xylylenediamine, tolylene diamine, para-xylylenediamine, phenylene diamine, and isophorone diamine.

As the carboxylic acid amide-based compound, a compound produced by polycondensation of stearic acid, sebacic acid, and ethylenediamine is preferable, and a compound produced by polycondensation of 2 moles of stearic acid, 1 mole of sebacic acid, and 2 moles of ethylenediamine is more preferable. In addition, bis-amide-based compounds produced by reacting a diamine such as N,N'-methylenebis(stearamide) or N,N'-ethylenebis(stearamide) with an aliphatic carboxylic acid, and dicarboxylic acid amide compounds such as N,N'-dioctadecyl terephthalamide may also be suitably used.

Examples of the aliphatic carboxylic acid include saturated or unsaturated aliphatic monovalent, divalent, or trivalent carboxylic acids. Here, the term aliphatic carboxylic acid includes alicyclic carboxylic acids. Among these, the aliphatic carboxylic acid is preferably a monovalent or divalent carboxylic acid having from 6 to 36 carbons, and is more preferably an aliphatic saturated monovalent carboxylic acid having from 6 to 36 carbons. Specific examples of such aliphatic carboxylic acids include palmitic acid, stearic acid, caproic acid, capric acid, lauric acid, arachidic acid, behenic acid, lignoceric acid, cerotic acid, melissic acid, tetratriacontanoic acid, montanic acid, adipic acid, and azelaic acid.

As the aliphatic carboxylic acid in the ester of an aliphatic carboxylic acid and an alcohol, for example, those same as the aliphatic carboxylic acids listed above can be used. Meanwhile, examples of the alcohol include saturated or unsaturated monohydric or polyhydric alcohols. These alcohols may have a substituent such as a fluorine atom or an aryl group. Among these, a monohydric or polyhydric saturated alcohol having 30 or fewer carbons is preferable, and an aliphatic or alicyclic saturated monohydric alcohol having 30 or fewer carbons or an aliphatic saturated polyhydric alcohol having 30 or fewer carbons is more preferable.

Specific examples of such alcohols include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, and dipentaerythritol.

Specific examples of the ester of an aliphatic carboxylic acid and an alcohol include beeswax (a mixture containing myricyl palmitate as a main component), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, pentaerythritol tetrastearate, and esters of montanic acid and a polyfunctional alcohol.

Examples of the aliphatic hydrocarbon having a number average molecular weight of from 200 to 15000 include liquid paraffin, paraffin wax, microwax, polyethylene wax, Fischer-Tropsch wax, and α-olefin oligomers having from 3 to 12 carbons. Here, the term aliphatic hydrocarbon includes alicyclic hydrocarbons. The number average molecular weight of the aliphatic hydrocarbon is preferably 5000 or less.

Examples of the polyolefin wax include polyethylene wax, polypropylene wax, and polyethylene propylene wax, and polyethylene wax is preferable.

The polyolefin wax may be unmodified or modified. Examples of the modified polyolefin wax include vinyl ester-modified polyolefin wax, acid-modified polyolefin wax, and oxidized polyolefin wax, and oxidized polyolefin wax is preferable. The oxidized polyolefin wax exhibits excellent miscibility with the polyalkylene terephthalate resin, and tends to effectively suppress mold deposits of the resulting resin composition.

The oxidized polyolefin wax can be produced by subjecting a corresponding unmodified polyolefin wax to an oxidation treatment. Examples of the oxidized polyethylene wax include Licowax (trade name) PED521, Licowax PED522, and Licowax PED121, and Ceridust (trade name) 3715, which are all available from Clariant AG.

For details on commercially available polyolefin waxes, in addition to the above, reference can be made to the description in paragraph [0028] of JP 2022-140470 A, the contents of which are incorporated herein by reference.

The weight average molecular weight of the polyolefin wax is preferably 800 or greater, more preferably 1000 or greater, even more preferably 1500 or greater, still more preferably 2000 or greater, and yet more preferably 2500 or greater. When the weight average molecular weight is equal to or greater than the above lower limit value, the glowing time tends to be further shortened. The weight average molecular weight of the polyolefin wax is preferably 30000 or less, more preferably 20000 or less, even more preferably 15000 or less, and further preferably 10000 or less. When the weight average molecular weight is equal to or less than the above upper limit value, fluidity of the resin composition during molding tends to be further improved.

The weight-average molecular weight can be measured by gel permeation chromatography (GPC) using the HLC-8320GPC EcoSEC available from Tosoh Corporation with tetrahydrofuran being used as the solvent and with a Shodex KF-G column, three KF-805L columns, and a KF-800D column being used as the columns at column temperatures of 40°C and a flow of 1.2 mL/min. Moreover, the weight average molecular weight can be measured as a polystyrene-equivalent value detected by a detector (UV-8320) at a detection wavelength of 254 nm.

In a case in which the resin composition of the present embodiment contains two or more types of polyolefin waxes, the weight average molecular weight of the mixture of polyolefin waxes is used.

The dropping point of the polyolefin wax is preferably 165°C or lower, more preferably 160°C or lower, even more preferably 155°C or lower, still more preferably 150°C or lower, yet more preferably 145°C or lower, even more preferably 140°C or lower, still even more preferably 135°C or lower, and particularly preferably 130°C or lower, and is preferably 80°C or higher, more preferably 85°C or higher, even more preferably 85°C or higher, yet even more preferably 90°C or higher, and still more preferably 95°C or higher.

To obtain the dropping point, the polyolefin wax is heated until it changes from a solid to a liquid state, and the dropping point is the temperature at which the first drop of the molten substance drips from a standardized cup having a 2.8 mm opening.

With regard to the release agent, in addition to the above, reference can be made to the description in paragraphs [0063] to [0077] of JP 2018-070722 A and to the description in paragraphs [0090] to [0098] of JP 2019-123809 A, the contents of which are incorporated herein by reference.

In the resin composition of the present embodiment, the release agent is contained in an amount of preferably 0.01 parts by mass or greater, more preferably 0.1 parts by mass or greater, still more preferably 0.3 parts by mass or greater, even more preferably 0.5 parts by mass or greater, and preferably 5 parts by mass or less, more preferably 4 parts by mass or less, still more preferably 3 parts by mass or less, even more preferably 2 parts by mass or less, with respect to 100 parts by mass of the thermoplastic resin contained in the resin composition. When the content of the release agent is equal to or greater than the above lower limit value, the mold releasability of the resulting molded article tends to be further improved. Moreover, when the content is equal to or less than the above upper limit value, bleed-out of the resulting molded article can be effectively suppressed.

The resin composition may contain only one type of release agent, or may contain two or more types of release agents. In a case in which two or more types are contained, the total amount thereof is preferably within the above range.

One example of 100 parts by mass of the thermoplastic resin contained in the resin composition is 100 parts by mass in total of the polybutylene terephthalate resin and the amorphous thermoplastic resin having a carbonate bond and/or an ester bond.

Another example of 100 parts by mass of the thermoplastic resin contained in the resin composition is 100 parts by mass in total of the polybutylene terephthalate resin and the polystyrene-based resin.

Another example of 100 parts by mass of the thermoplastic resin contained in the resin composition is 100 parts by mass of the polybutylene terephthalate resin.

The resin composition of the present embodiment may contain only one type of stabilizer or two or more types of stabilizers. In a case in which two or more types are contained, the total amount thereof is preferably within the above range.

### Colorant

The resin composition of the present embodiment may contain a colorant (dye and/or pigment). By containing the colorant, designability of the resulting molded article can be enhanced. The colorant may be a dye or a pigment.

The dye used in the present embodiment is preferably a black dye and/or a black dye composition. The black dye composition means a dye composition in which two or more chromatic dyes such as red, blue, and green are combined to exhibit a black color. A first embodiment of the black dye composition is a form including a green dye and a red dye. A second embodiment of the black dye composition is a form including a red dye, a blue dye, and a yellow dye.

Examples of commercially available products of a light transmissive dye include Plast Yellow 8000, Plast Red M 8315, Plast Red 8370, and Oil Green 5602 which are colorants available from Arimoto Chemical Co., Ltd., Macrolex Yellow 3G, Macrolex Red EG, and Macrolex Green 5B which are colorants available from LANXESS, and KP Plast HK, KP Plast Red HG, KP Plast Red H2G, KP Plast Blue R, KP Plast Blue GR, and KP Plast Green G available from KIWA Chemical Industry Co., Ltd.

A dye described in JP 4157300 B and a dye described in JP 4040460 B can also be employed, the contents of which are incorporated herein by reference.

Examples of the pigment used in the present embodiment include inorganic pigments (black pigments such as carbon black (for example, acetylene black, lamp black, thermal black, furnace black, channel black, ketjen black, and the like), red pigments such as iron oxide red, orange pigments such as molybdate orange, and white pigments such as titanium oxide) and organic pigments (yellow pigment, orange pigment, red pigment, blue pigment, green pigment, and the like), black pigments are preferable, and carbon black is more preferable.

When the resin composition of the present embodiment contains a pigment, it is preferable to use a thermoplastic resin (preferably a polyester resin, more preferably a polybutylene terephthalate resin) as a masterbatch. The concentration of the pigment in the masterbatch is preferably from 1 to 50 mass%.

When the resin composition of the present embodiment contains a colorant, the content thereof is preferably 0.1 parts by mass or greater, more preferably 0.2 parts by mass or greater, still more preferably 0.4 parts by mass or greater, and preferably 5 parts by mass or less, more preferably 4 parts by mass or less, with respect to 100 parts by mass of the thermoplastic resin contained in the resin composition.

The resin composition of the present embodiment may contain only one type of colorant or two or more types of colorants. In a case in which two or more types are contained, the total amount thereof is preferably within the above range.

One example of 100 parts by mass of the thermoplastic resin contained in the resin composition is 100 parts by mass in total of the polybutylene terephthalate resin and the amorphous thermoplastic resin having a carbonate bond and/or an ester bond.

Another example of 100 parts by mass of the thermoplastic resin contained in the resin composition is 100 parts by mass in total of the polybutylene terephthalate resin and the polystyrene-based resin.

Another example of 100 parts by mass of the thermoplastic resin contained in the resin composition is 100 parts by mass of the polybutylene terephthalate resin.

The resin composition of the present embodiment may contain only one type of stabilizer or two or more types of stabilizers. In a case in which two or more types are contained, the total amount thereof is preferably within the above range.

### Flame Retardant

The resin composition of the present embodiment preferably contains a flame retardant.

The type of the flame retardant is not particularly limited, known flame retardants can be used, and examples thereof include halogen-based flame retardants, phosphorus-based flame retardants (such as metal phosphinate and melamine polyphosphate), nitrogen-based flame retardants (such as melamine cyanurate), and metal hydroxides (such as magnesium hydroxide).

An example of the flame retardant in the present embodiment is a phosphorus-based flame retardant, another example is a nitrogen-based flame retardant, and still another example is a halogen-based flame retardant.

### Halogen-Based Flame Retardant

As the halogen-based flame retardant, a bromine-based flame retardant is more preferable.

The type of the bromine-based flame retardant is not particularly limited, brominated phthalimides, brominated poly(meth)acrylates, brominated polycarbonates, brominated epoxies, and brominated polystyrenes are preferable, and brominated epoxies are more preferable.

The brominated phthalimide is preferably represented by Formula (1). 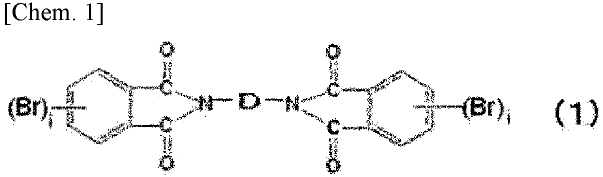 where D represents a group formed of a combination of two or more of an alkylene group, an arylene group, -S(=O)₂-, -C(=O)-, and -O-, and i is an integer from 1 to 4.

In Formula (1), D represents a group formed of a combination of two or more of an alkylene group, an arylene group, -S(=O)₂-, -C(=O)-, and -O-. D is preferably a group formed of a combination of an alkylene group or an arylene group and at least one of -S(=O)₂-, -C(=O)-, or -O-, is more preferably a group formed of a combination of an alkylene group or an arylene group and one of -S(=O)₂-, -C(=O)-, and -O-, and is even more preferably an alkylene group.

The group formed from a combination of an alkylene group and -O- is intended to include, for example, a combination of two alkylene groups and one -O- (the same applies to other combinations).

The alkylene group represented by D is preferably an alkylene group having from 1 to 6 carbons, and more preferably a methylene group, an ethylene group, a propylene group, or a butylene group. The arylene group is preferably a phenylene group.

i is an integer from 1 to 4, and is preferably 4.

Examples of the brominated phthalimide represented by Formula (1) include N,N'-(bis-tetrabromophthalimido) ethane, N,N'-(bis-tetrabromophthalimido) propane, N,N'-(bis-tetrabromophthalimido) butane, N,N'-(bis-tetrabromophthalimido) diethyl ether, N,N'-(bis-tetrabromophthalimido) dipropyl ether, N,N'-(bis-tetrabromophthalimido) dibutyl ether, N,N'-(bis-tetrabromophthalimido) diphenyl sulfone, N,N'-(bis-tetrabromophthalimido) diphenyl ketone, and N,N'-(bis-tetrabromophthalimido) diphenyl ether.

As the brominated phthalimide, the brominated phthalimide represented by Formula (1) is preferably a brominated phthalimide represented by Formula (2). 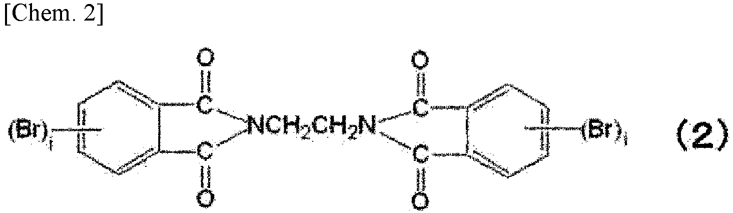
where i is an integer from 1 to 4.
i is an integer from 1 to 4, and is preferably 4.

The brominated poly(meth)acrylate is preferably a polymer produced by polymerizing a bromine atom-containing benzyl (meth)acrylate alone, copolymerizing two or more types of bromine atom-containing benzyl (meth)acrylates, or copolymerizing a bromine atom-containing benzyl (meth)acrylate with another vinyl-based monomer. The bromine atom is added to a benzene ring, and the number of bromine atoms added per benzene ring is preferably from 1 to 5, and more preferably 4 or 5.

Examples of the bromine atom-containing benzyl acrylate include pentabromobenzyl acrylate, tetrabromobenzyl acrylate, tribromobenzyl acrylate, and mixtures thereof. Examples of the bromine atom-containing benzyl methacrylate include methacrylates corresponding to the above-mentioned acrylates.

Specific examples of the other vinyl-based monomers used for copolymerization with the bromine atom-containing benzyl (meth)acrylate include acrylic acid and acrylic acid esters such as methyl acrylate, ethyl acrylate, butyl acrylate, and benzyl acrylate; methacrylic acid and methacrylic acid esters such as methyl methacrylate, ethyl methacrylate, butyl methacrylate, and benzyl methacrylate; styrene, acrylonitrile, unsaturated carboxylic acids such as fumaric acid and maleic acid, or anhydrides thereof; vinyl acetate, and vinyl chloride.

Relative to the bromine atom-containing benzyl (meth)acrylate, these are usually used in an equimolar amount or less and preferably in a 0.5-fold molar amount or less.

Examples of the vinyl-based monomer that can be used include xylene diacrylate, xylene dimethacrylate, tetrabromoxylene diacrylate, tetrabromoxylene dimethacrylate, butadiene, isoprene, and divinylbenzene, and these monomers can usually be used at an amount of 0.5-fold molar amount or less of the bromine atom-containing benzyl acrylate or bromine atom-containing benzyl methacrylate.

The brominated poly(meth)acrylate is preferably a polymer produced by polymerizing a bromine atom-containing (meth)acrylate monomer and particularly benzyl (meth)acrylate alone, copolymerizing two or more types of bromine atom-containing (meth)acrylate monomers, or copolymerizing a bromine atom-containing (meth)acrylate monomer with another vinyl-based monomer. The bromine atom is added to a benzene ring, and the number of bromine atoms added per benzene ring is preferably from 1 to 5, and more preferably 4 or 5.

As the brominated poly(meth)acrylate, a pentabromobenzyl poly(meth)acrylate is preferred because of the high bromine content.

The brominated poly(meth)acrylate may be of any molecular weight, and the molecular weight thereof may be appropriately selected and determined. The molecular weight of the brominated poly(meth)acrylate in terms of weight average molecular weight (Mw) is preferably 3000 or greater, more preferably 10000 or greater, still more preferably 15000 or greater. When the average molecular weight is equal to or greater than the above lower limit value, the resulting molded article tends to have higher mechanical strength. Moreover, the upper limit of the weight average molecular weight (Mw) is preferably 100000 or less, more preferably 80000 or less, even more preferably 60000 or less, yet even more preferably 50000 or less, and still more preferably 35000 or less. When the weight average molecular weight (Mw) is equal to or less than the above upper limit value, the fluidity of the resin composition tends to be further improved.

The brominated polycarbonate preferably has a free bromine content of 0.05 mass% or greater, and preferably 0.20 mass% or less. When the free bromine content is within such a range, the heat resistance stability of the resin composition tends to be further improved. The brominated polycarbonate preferably has a chlorine atom content of 0.001 mass% or greater and 0.20 mass% or less. When the chlorine atom content is in such a range, the mold corrosion resistance during molding tends to be further improved.

Specifically, the brominated polycarbonate is preferably a brominated polycarbonate produced from, for example, a brominated bisphenol A, and particularly tetrabromobisphenol A. Examples of a terminal structure thereof include a phenyl group, a 4-t-butylphenyl group, and a 2,4,6-tribromophenyl group, and a brominated polycarbonate having a 2,4,6-tribromophenyl group in the terminal group structure is particularly preferable.

The average number of carbonate constituent units in the brominated polycarbonate may be appropriately selected and determined, but is preferably from 2 to 30, more preferably from 3 to 15, and even more preferably from 3 to 10.

The brominated polycarbonate may be of any molecular weight and the molecular weight thereof may be appropriately selected and determined. The molecular weight thereof in terms of viscosity average molecular weight is preferably from 1000 to 20000, and more preferably from 2000 to 10000.

The brominated polycarbonate produced from the brominated bisphenol A described above can be produced by, for example, a common method of reacting a brominated bisphenol with phosgene. Examples of a capping agent include aromatic monohydroxy compounds, which may be substituted with a halogen or an organic group.

Specific examples of the brominated epoxy compound preferably include bisphenol A type brominated epoxy compounds typified by a tetrabromobisphenol A epoxy compound and a glycidyl brominated bisphenol A epoxy compound.

The brominated epoxy compound may be of any molecular weight, and the molecular weight thereof may be appropriately selected and determined. The molecular weight thereof in terms of weight average molecular weight (Mw) is preferably 3000 or greater, more preferably 10000 or greater, still more preferably 13000 or greater, even more preferably 15000 or greater, and still even more preferably 18000 or greater. When the molecular weight is equal to or greater than the above lower limit value, the resulting molded article tends to have higher mechanical strength. Moreover, the upper limit of the weight average molecular weight (Mw) is preferably 100000 or less, more preferably 80000 or less, still more preferably 78000 or less, even more preferably 75000 or less, and further more preferably 70000 or less. When the weight average molecular weight (Mw) is equal to or less than the above upper limit value, the fluidity of the resin composition tends to be further improved.

The brominated epoxy compound preferably has an epoxy equivalent of from 3000 to 40000 g/eq, more preferably from 4000 to 35000 g/eq, and particularly preferably from 10000 to 30000 g/eq.

**In** addition, a brominated epoxy oligomer may be used in combination as the brominated epoxy compound. **In** this case, for example, the flame retardancy, mold releasability, and fluidity can be appropriately adjusted by using an oligomer having a Mw of 5000 or less at a proportion of about 50 mass% or less. The brominated epoxy compound has any bromine atom content, but in order to impart sufficient flame retardancy, the bromine atom content is usually 10 mass% or greater, preferably 20 mass% or greater, and particularly preferably 30 mass% or greater, and the upper limit thereof is preferably 60 mass%, and within that range, is more preferably 55 mass% or less.

The brominated polystyrene is preferably a brominated polystyrene containing a constituent unit represented by Formula (3). 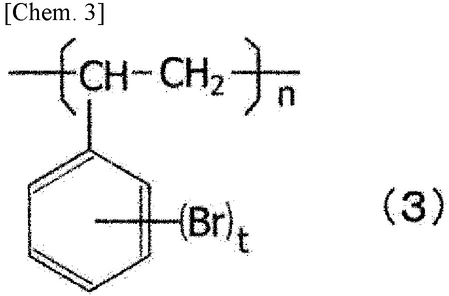 where t is an integer from 1 to 5, and n is the number of constituent units.

The brominated polystyrene may be one produced by brominating polystyrene or one produced by polymerizing a brominated styrene monomer, and the brominated polystyrene produced by polymerizing brominated styrene is preferable because the amount of free bromine (atoms) is small. **In** Formula (3), the CH group to which the brominated benzene is bonded may be substituted with a methyl group. Moreover, the brominated polystyrene may be a copolymer produced by copolymerizing a brominated styrene monomer with another vinyl-based monomer. Examples of the vinyl-based monomer in this case include styrene, α-methylstyrene, (meth)acrylonitrile, methyl (meth)acrylate, butadiene, and vinyl acetate. The brominated polystyrene used may be a single substance or a mixture of two or more types having different structures, and may contain units derived from styrene monomers having different quantities of bromine in a single molecular chain.

Specific examples of the brominated polystyrene include poly(4-bromostyrene), poly(2-bromostyrene), poly(3-bromostyrene), poly(2,4-dibromostyrene), poly(2,6-dibromostyrene), poly(2,5-dibromostyrene), poly(3,5-dibromostyrene), poly(2,4,6-tribromostyrene), poly(2,4,5-tribromostyrene), poly(2,3,5-tribromostyrene), poly(4-bromo-α-methylstyrene), poly(2,4-dibromo-α-methylstyrene), poly(2,5-dibromo-α-methylstyrene), poly(2,4,6-tribromo-α-methylstyrene), and poly(2,4,5-tribromo-α-methylstyrene). Poly(2,4,6-tribromostyrene), poly(2,4,5-tribromostyrene), and polydibromostyrene and polytribromostyrene containing an average of 2 to 3 bromine groups in the benzene ring are particularly preferably used.

The brominated polystyrene preferably has a number n of the constituent units in Formula (3) (average degree of polymerization) of from 30 to 1500, more preferably from 150 to 1000, and particularly preferably from 300 to 800. When the average degree of polymerization is less than 30, blooming is likely to occur, whereas when the average degree of polymerization exceeds 1500, poor dispersion is likely to occur and mechanical properties are likely to deteriorate. The weight average molecular weight (Mw) of the brominated polystyrene is preferably from 5000 to 500000, more preferably from 10000 to 500000, even more preferably from 10000 to 300000, yet even more preferably from 10000 to 100000, and still more preferably from 10000 to 70000. In particular, in the case of the brominated product of polystyrene described above, the weight average molecular weight (Mw) is preferably from 50000 to 70000, and in the case of the brominated polystyrene produced by a polymerization method, the weight average molecular weight (Mw) is preferably from about 10000 to about 30000. The weight average molecular weight (Mw) can be determined as a value in terms of standard polystyrene by GPC measurement.

The content of the halogen-based flame retardant in the resin composition of the present embodiment is preferably 1 part by mass or greater, more preferably 3 parts by mass or greater, still more preferably 5 parts by mass or greater, even more preferably 7 parts by mass or greater, further more preferably 9 parts by mass or greater, and preferably 40 parts by mass or less, more preferably 30 parts by mass or less, still more preferably 20 parts by mass or less, with respect to 100 parts by mass of the thermoplastic resin contained in the resin composition. When the content of the flame retardant is equal to or greater than the above lower limit value, the flame retardancy of the resulting molded article tends to be further improved. When the content is equal to or less than the above upper limit value, the mechanical strength of the resulting molded article tends to further improve.

The resin composition of the present embodiment may contain only one type of halogen-based flame retardant or two or more types of halogen-based flame retardants. In a case in which two or more types are contained, the total amount thereof is preferably within the above range.

### Phosphorus-Based Flame Retardant

Examples of the phosphorus-based flame retardant include metal phosphinate, melamine polyphosphate, condensed phosphoric acid esters, and phosphazene compounds, and metal phosphinate is preferable.

When a metal phosphinate is used as the flame retardant, the type thereof is not particularly limited, but the metal phosphinate preferably has an anion moiety represented by Formula (4) or (5) and a cation moiety containing a metal ion of any of calcium, magnesium, aluminum, or zinc. 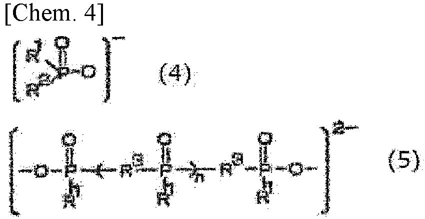 where R¹ and R² each independently represent an alkyl group having from 1 to 6 carbons or an aryl group optionally having a substituent, the multiple R¹ may be the same or different, R³ represents an alkylene group having from 2 to 10 carbons, an arylene group optionally having a substituent, or a group formed by a combination thereof, the multiple R³ may be the same or different, and n represents an integer from 0 to 2.

The aryl group optionally having a substituent is preferably a phenyl group optionally having a substituent. In a case of an aryl group having a substituent, the substituent is preferably an alkyl group having from 1 to 3 carbons. Further, it is also preferable that the aryl group be unsubstituted.

The arylene group optionally having a substituent is preferably a phenylene group optionally having a substituent. The arylene group optionally having a substituent is preferably unsubstituted or has an alkyl group having from 1 to 3 carbons (preferably a methyl group) as a substituent.

In the present embodiment, a metal phosphinate represented by Formula (4) is preferable. In the present embodiment, aluminum phosphinate is preferable.

Specific examples of the metal phosphinate include calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methane di(methylphosphinate), magnesium methane di(methylphosphinate), aluminum methane bis(methylphosphinate), zinc methane bis(methylphosphinate), calcium benzene-1,4-bis(methylphosphinate), magnesium benzene-1,4-bis(methylphosphinate), aluminum benzene-1,4-bis(methylphosphinate), zinc benzene-1,4-bis(methylphosphinate), calcium methyl phenylphosphinate, magnesium methyl phenylphosphinate, aluminum methyl phenylphosphinate, zinc methyl phenylphosphinate, calcium diphenylphosphinate, magnesium diphenylphosphinate, aluminum diphenylphosphinate, and zinc diphenylphosphinate.

For details on the metal phosphinate, reference can be made to the description in paragraphs [0052] to [0058] of WO 2010/010669 A1, the content of which is incorporated herein by reference.

In addition, details of the phosphorus-based flame retardant can be taken into consideration the description in paragraphs from [0064] to [0084] of WO 2021/241471, the content of which is incorporated herein by reference.

The content of the phosphorus-based flame retardant in the resin composition of the present embodiment is preferably 1 part by mass or greater, more preferably 5 parts by mass or greater, still more preferably 10 parts by mass or greater, even more preferably 15 parts by mass or greater, further more preferably 20 parts by mass or greater, still further more preferably 25 parts by mass or greater, and preferably 40 parts by mass or less, more preferably 35 parts by mass or less, still more preferably 30 parts by mass or less, with respect to 100 parts by mass of the thermoplastic resin contained in the resin composition. When the content of the flame retardant is equal to or greater than the above lower limit value, the flame retardancy of the resulting molded article tends to be further improved. When the content is equal to or less than the above upper limit value, the mechanical strength of the resulting molded article tends to further improve.

The resin composition of the present embodiment may contain only one type of phosphorus-based flame retardant or two or more types of phosphorus-based flame retardants. In a case in which two or more types are contained, the total amount thereof is preferably within the above range.

### Nitrogen-Based Flame Retardant

Examples of the nitrogen-based flame retardant include an aliphatic amine compound, an aromatic amine compound, a nitrogen-containing heterocyclic compound, a cyan compound, an aliphatic amide, an aromatic amide, urea, and thiourea.

Examples of the aliphatic amine include ethylamine, butylamine, diethylamine, ethylenediamine, butylenediamine, triethylenetetramine, 1,2-diaminocyclohexane, and 1,2-diaminocyclooctane.

Examples of the aromatic amine include aniline and phenylenediamine, and examples of the nitrogen-containing heterocyclic compound include uric acid, adenine, guanine, 2,6-diaminopurine, 2,4,6-triaminopyridine, and a triazine compound.

Examples of the cyan compound include dicyandiamide, examples of the aliphatic amide include N,N-dimethylacetamide, and examples of the aromatic amide include N,N-diphenylacetamide.

The triazine compound exemplified above is a nitrogen-containing heterocyclic compound having a triazine skeleton, and examples thereof include triazine, melamine, benzoguanamine, methylguanamine, cyanuric acid, melamine cyanurate, melamine isocyanurate, trimethyltriazine, triphenyltriazine, amelin, amelide, thiocyanuric acid, diaminomercaptotriazine, diaminomethyltriazine, diaminophenyltriazine, and diaminoisopropoxy triazine.

Melamine cyanurate or melamine isocyanurate is preferably an adduct of cyanuric acid or isocyanuric acid with a triazine compound, and may include adducts usually having a composition of 1 to 1 (molar ratio), optionally 1 to 2 (molar ratio).

Among the nitrogen-based flame retardants, nitrogen-containing heterocyclic compounds are preferable, and among them, triazine compounds are preferable, and melamine cyanurate is more preferable.

The resin composition of the present embodiment may or may not contain a nitrogen-based flame retardant. When the resin composition of the present embodiment contains the nitrogen-based flame retardant, the content thereof is preferably 1 part by mass or greater, more preferably 5 parts by mass or greater, still more preferably 10 parts by mass or greater, and is 19 parts by mass or less, preferably 18 parts by mass or less, more preferably 16 parts by mass or less, still more preferably 14 parts by mass or less, even more preferably 13 parts by mass or less, further more preferably 10 parts by mass or less, with respect to 100 parts by mass of the thermoplastic resin contained in the resin composition, and may be 8 parts by mass or less, 5 parts by mass or less, 3 parts by mass or less, 1 part by mass or less, or 0.1 parts by mass or less, depending on the intended use and the like. When the content is equal to or greater than the above lower limit value, the flame retardancy and tracking resistance of the resulting molded article tend to further improve. When the content is equal to or less than the above upper limit value, the mechanical strength tends to further improve, gelation at the time of producing the resin composition tends to be suppressed, and a decrease in fluidity due to thickening of the resin composition tends to be suppressed.

The resin composition of the present embodiment may contain only one type of nitrogen-based flame retardant or two or more types of nitrogen-based flame retardants. In a case in which two or more types are contained, the total amount thereof is preferably within the above range.

The content (total amount) of the flame retardant in the resin composition of the present embodiment is preferably 1 part by mass or greater, preferably 5 parts by mass or greater, more preferably 10 parts by mass or greater, still more preferably 15 parts by mass or greater, even more preferably 20 parts by mass or greater, further more preferably 25 parts by mass or greater, and preferably 40 parts by mass or less, preferably 35 parts by mass or less, more preferably 30 parts by mass or less, still more preferably 25 parts by mass or less, even more preferably 20 parts by mass or less, with respect to 100 parts by mass of the thermoplastic resin contained in the resin composition. When the content is equal to or greater than the above lower limit value, the flame retardancy tends to further improve. When the content is equal to or less than the above upper limit value, the mechanical strength tends to further improve.

The resin composition of the present embodiment may contain only one type of flame retardant or two or more types of flame retardants. In a case in which two or more types are contained, the total amount thereof is preferably within the above range.

### Flame Retardant Aid

The resin composition of the present embodiment may contain a flame retardant aid. When the flame retardant aid is contained, it is preferable to contain an antimony compound. The flame retardant aid (preferably the antimony compound) improves the flame retardancy of the resulting molded article.

As the antimony compound, antimony trioxide (Sb₂O₃), antimony pentoxide (Sb₂O₅), sodium antimonate, and the like are preferable, and among them, antimony trioxide is particularly preferable.

In the resin composition of the present embodiment, the antimony compound may be blended as a masterbatch with the thermoplastic resin. As a result, the antimony compound is likely to be present in a thermoplastic resin phase, thermal stability during melt-kneading and molding processing is improved, deterioration of impact resistance is suppressed, and variations in flame retardancy and impact resistance tend to decrease.

The content of the antimony compound in the masterbatch is preferably from 20 to 90 mass%. The content of the antimony compound in the masterbatch is more preferably 30 mass% or greater, still more preferably 40 mass% or greater, even more preferably 50 mass% or greater, further more preferably 60 mass% or greater, and particularly preferably 70 mass% or greater.

In the resin composition of the present embodiment, the content of the antimony compound is preferably 0.1 parts by mass or greater, more preferably 1 part by mass or greater, and still more preferably 2 parts by mass or greater, with respect to 100 parts by mass of the thermoplastic resin contained in the resin composition of the present embodiment. When the content is equal to or greater than the above lower limit value, the flame retardancy of the resulting molded article further improves. The upper limit value of the content of the antimony compound is preferably 40 parts by mass or less, more preferably 30 parts by mass or less, still more preferably 20 parts by mass or less, even more preferably 10 parts by mass or less, and further more preferably 5 parts by mass or less, with respect to 100 parts by mass of the thermoplastic resin. When the content is equal to or less than the above upper limit value, the mold releasability and impact resistance of the resulting molded article tend to be improved.

### Additional Component

The resin composition of the present embodiment may contain an additional component as necessary as long as the desired physical properties are not significantly impaired. Examples of the additional component include various resin additives. One type of additional component may be contained, or two or more types of additional components may be contained in any combination and ratio. The total amount of these additional components is preferably from 0 to 5 mass%, more preferably from 0 to 3 mass%, and still more preferably from 0 to 1 mass% in 100 mass% of the resin composition.

Specific examples thereof include ultraviolet absorbers, antistatic agents, antifogging agents, antiblocking agents, fluidity improvers, plasticizers, dispersants, and antibacterial agents.

In addition, additives described in paragraphs [0047] to [0103] of WO 2021/241471 A1, the contents of which are incorporated herein by reference, can be blended in the resin composition of the present embodiment within a range that does not depart from the gist of the present invention.

A resin composition (1) of the present embodiment is a resin composition having a high crystallization temperature Tc at the time of temperature decrease.

In the resin composition (1) of the present embodiment, the total of the polybutylene terephthalate resin, the amorphous thermoplastic resin (amorphous thermoplastic resin having a carbonate bond and/or an ester bond, and amorphous thermoplastic resin having no carbonate bond and no ester bond to be blended as necessary), and the glass fiber preferably accounts for 80 mass% or greater, more preferably 85 mass% or greater, still more preferably 90 mass% or greater, even more preferably 95 mass% or greater, and may be 100 mass% or less of the resin composition.

In the resin composition (1) of the present embodiment, the total of the polybutylene terephthalate resin, the amorphous thermoplastic resin having a carbonate bond and/or an ester bond, and the glass fiber, the amorphous thermoplastic resin having no carbonate bond and no ester bond, the reactive compound, the stabilizer, the release agent, and the colorant, which are blended as necessary, preferably accounts for 90 mass% or greater, more preferably 95 mass% or greater, still more preferably 97 mass% or greater, may account for 99 mass% or greater, and may be 100 mass% or less of the resin composition.

The resin composition (2) of the present embodiment is a resin composition capable of providing a molded article having high weld strength in a resin composition produced by blending a polybutylene terephthalate resin with a polystyrene-based resin.

In the resin composition (2) of the present embodiment, the total of the polybutylene terephthalate resin, the polystyrene-based resin, and the glass fiber preferably accounts for 80 mass% or greater, more preferably 85 mass% or greater, still more preferably 90 mass% or greater, even more preferably 95 mass% or greater, and may be 100 mass% or less of the resin composition.

In the resin composition (2) of the present embodiment, the total of the polybutylene terephthalate resin, the polystyrene-based resin, the polycarbonate resin, the glass fiber, the stabilizer, the release agent, and the colorant, which are blended as necessary, preferably accounts for 90 mass% or greater, more preferably 95 mass% or greater, still more preferably 97 mass% or greater, may account for 99 mass% or greater, and may be 100 mass% or less of the resin composition.

The resin composition (3) of the present embodiment is a resin composition capable of providing a molded article having a small gas content of the produced pellet and excellent adhesive strength with other members using an epoxy-based adhesive while maintaining the mechanical strength.

In an example of the resin composition (3) of the present embodiment, the total of the polybutylene terephthalate resin, the fibrous reinforcing material, and the component to be blended as necessary is 100 mass%.

In the resin composition (3) of the present embodiment, the total of the polybutylene terephthalate resin, the epoxy compound, the stabilizer, and the fibrous reinforcing material preferably accounts for 90 mass% or greater, more preferably 95 mass% or greater, and may be 100 mass% of the resin composition.

In another example of the resin composition (3) of the present embodiment, the total of the polybutylene terephthalate resin, other thermoplastic resins (for example, polyethylene terephthalate resin) other than the polybutylene terephthalate resin, the epoxy compound, the stabilizer, and the fibrous reinforcing material preferably accounts for 90 mass% or greater, more preferably 95 mass% or greater, and may be 100 mass% of the resin composition.

### Physical Properties of Resin Composition

In the resin composition of the present embodiment (particularly, the resin composition (3)), the melt volume rate (MVR) at 250°C under a load of 5 kgf is preferably 4 cm³/minute or greater, more preferably 6 cm³/minute or greater, still more preferably 9 cm³/minute or greater, even more preferably 15 cm³/minute or greater, further more preferably 25 cm³/minute or greater, and preferably 100 cm³/minute or less, more preferably 90 cm³/minute or less, still more preferably 80 cm³/minute or less, even more preferably 65 cm³/minute or less, and further more preferably 50 cm³/minute or less. When the melt volume rate is equal to or greater than the above lower limit value, the fluidity in a molten state is improved, and the moldability tends to be excellent. When the melt volume rate is equal to or less than the above upper limit value, mechanical properties such as tensile strength tend to be excellent.

The resin composition of the present embodiment (particularly, the resin composition (3)) is molded into an ISO test piece (4 mm thickness), and has a tensile elastic modulus measured according to ISO527-1 and ISO527-2 of preferably 5000 MPa or greater, more preferably 6000 MPa or greater, still more preferably 7000 MPa or greater, even more preferably 8000 MPa or greater, and further more preferably 9000 MPa or greater, and although the upper limit is not particularly defined, for example, even 100000 MPa or less sufficiently satisfies the required performance. When the tensile elastic modulus is equal to or greater than the above lower limit value, the rigidity of the molded article is improved, and it is more likely to become possible to reduce the thickness of the molded article and the weight of the molded article.

The resin composition of the present embodiment (particularly, the resin composition (3)) is molded into an ISO test piece (4 mm thickness), and has a tensile strength measured according to ISO527-1 and ISO527-2 of preferably 70 MPa or greater, more preferably 80 MPa or greater, still more preferably 90 MPa or greater, even more preferably 100 MPa or greater, and further more preferably 120 MPa or greater, and although the upper limit is not particularly defined, for example, even 500 MPa or less sufficiently satisfies the required performance. When the tensile strength is equal to or greater than the above lower limit value, the mechanical strength of the molded article tends to be excellent.

The resin composition of the present embodiment (particularly, the resin composition (3)) is molded into an ISO test piece (4 mm thickness), and has a tensile fracture strain measured according to ISO527-1 and ISO527-2 of preferably 0.5% or greater, more preferably 0.8% or greater, still more preferably 1.0% or greater, even more preferably 1.2% or greater, and further more preferably 1.5% or greater, and although the upper limit is not particularly defined, for example, even 10% or less sufficiently satisfies the required performance. When the tensile fracture strain is equal to or greater than the above lower limit value, toughness of the molded article tends to be excellent.

### Method for Producing Resin Composition

The resin composition of the present embodiment can be produced by an ordinary method for preparing a resin composition (e.g., pellets). Usually, the components and various additives which are optionally added are mixed well together and then melt-kneaded in a single-screw or twin-screw extruder. Alternatively, the resin composition of the present embodiment can be prepared by not mixing the respective components in advance or mixing only a portion of the components in advance, supplying the mixture to an extruder using a feeder, and melt-kneading the mixture. For example, the glass fiber is preferably supplied to an extruder using a side feeder and melt-kneaded. Some components such as the colorant may be melt-kneaded with the thermoplastic resin to prepare a masterbatch, and then the remaining components may be blended therein and melt-kneaded.

### Method for Producing Molded Article

The resin composition or pellet of the present embodiment is molded according to a known method.

The method for producing the molded article is not particularly limited, and any molding method generally employed for resin compositions can be employed. Examples thereof include an injection molding method, an ultrahigh-speed injection molding method, an injection compression molding method, a two color molding method, a hollow molding method such as a gas assisted method, a molding method using an insulated mold, a molding method using a rapid heating mold, a foam molding method (including a supercritical fluid), an insert molding method, a molding method of in-mold coating molding (IMC), an extrusion molding method, a sheet molding method, a thermoforming method, a rotational molding method, a lamination molding method, a press molding method, and a blow molding method, and among these, an injection molding method is preferable.

For details on the injection molding method, reference can be made to the description in paragraphs [0113] to [0116] of JP 6183822 B, the content of which is incorporated herein by reference.

The mold temperature when molding with a mold, such as injection molding, is preferably from 40 to 150°C.

### Application

The resin composition of the present embodiment is used as a molded article formed from the resin composition or the pellet. The use of the resin composition and the pellet is not particularly limited, and the resin composition and the pellet can be widely used as a resin composition for injection molding.

As the application field, for example, the resin composition and the pellet can be widely used for electric and electronic device materials, vehicle materials, housing materials, materials for manufacturing parts in other industrial fields, and the like regardless of indoor or outdoor. In the present embodiment, in particular, a food container, a chemical container, an oil and/or fat product container, a hollow component for a vehicle (various tanks, intake manifold components, camera housing), an electrical component for a vehicle (various control units, ignition coil components, and the like), a motor component, various sensor components, a connector component, a switch component, a breaker component, a relay component, a coil component, a transformer component, a lamp component, and the like are preferable.

More specific examples of the vehicle components include a lamp housing, reflector, bezel, extension, a connector, an ECU case, a housing for an in-vehicle camera or a millimeter-wave radar, a battery case, and a sensor housing.

More specific examples of the electrical and electronic components include display devices such as personal computers, gaming devices, and televisions, printers, copiers, scanners, fax machines, electronic notebooks and PDAs, electronic desktop calculators, electronic dictionaries, cameras, video cameras, mobile phones, battery packs, drives and readers for recording media, a housing for a computer mouse, a numeric keypad, a CD player, an MD player, a portable radio/audio player, or the like, covers, keyboards, buttons, switch members, power meter housings, battery cases, trays for battery conveyance, relays, sensors, actuators, terminal switches, and grill cooking equipment components.

### Examples

Hereinafter, the present invention will be more specifically described with reference to examples. The materials, usage amounts, proportions, treatment contents, treatment procedures, and the like presented in the following examples can be appropriately changed without departing from the gist of the present invention. Thus, the scope of the present invention is not limited to the following specific examples.

When a measuring instrument or the like used in the examples is not readily available due to discontinuation or the like, other instruments having equivalent performance can be used for the measurements.

### 1. Raw Materials

The following raw materials were used.

**[Table 1]**

| Component | | Details |
|---|---|---|
| Polybutylene terephthalate resin | PBT1 | Post-consumer recycling (Derived from connectors, home electric appliances, etc.) |
| | | Material recycled polybutylene terephthalate resin |
| | | Available from Hongyu |
| | | Trade name: HTL-40 |
| | | Intrinsic viscosity: 0.87 dL/g |
| | PBT2 | Resin produced in Synthesis Example 1 |
| | PBT3 | Resin produced in Synthesis Example 2 |
| | PBT4 | Resin produced in Synthesis Example 3 |
| | PBT5 | Resin produced in Synthesis Example 4 |
| | PBT-6 | Polybutylene terephthalate resin |
| | | Available from Mitsubishi Chemical Group Corporation |
| | | Trade name: NOVADURAN 5008-C |
| | | Intrinsic viscosity: 0.83 dL/g |
| | PBT-7 | Post-consumer recycling (Derived from connectors, toothbrushes, etc.) |
| | | Material recycled polybutylene terephthalate resin |
| | | Available from Topcentral |
| | | Trade name: rPBT-B160 |
| | | Intrinsic viscosity: 0.78 dL/g |
| Polycarbonate resin | | Polycarbonate resin |
| | | Available from Mitsubishi Engineering-Plastics Corporation |
| | | Viscosity average molecular weight: 16000 |
| Polystyrene resin | | Polystyrene resin |
| | | Available from PS Japan Corporation, trade name: HH105 |
| | | Weight average molecular weight Mw: 3.12 × 10⁵ |
| AS resin | | Acrylonitrile-styrene copolymer, available from Denka Company Limited, trade name: GR-AT-R |
| Epoxy compound-1 | | Orthocresol novolac type epoxy resin |
| | | Polyglycidyl ether compound of O-cresol/formaldehyde polycondensate |
| | | Available from The Conservancy Association, trade name: CNE220 |
| | | Epoxy equivalent: 207 (g/eq), weight average molecular weight: 580 |
| Epoxy compound-2 | | Bisphenol A epoxy resin |
| | | Available from ADEKA Corporation, trade name: EP-17 |
| | | Epoxy equivalent: 185 (g/eq) |

**[Table 2]**

| Component | Details |
|---|---|
| Phosphorus stabilizer-1 | Zinc stearyl acid phosphate |
| | Available from Johoku Chemical Co., Ltd., trade name: JP-518Zn |
| Phosphorus stabilizer-2 | Phosphorus stabilizer |
| | Mixture of monostearyl acid phosphate and distearyl acid phosphate |
| | Available from ADEKA Corporation, trade name: ADK STAB AX-71 |
| Phenolic stabilizer | Pentaerythritol tetrakis [3-(3,5-di-tert-butyl-4-hydroxyphenyl) propionate] |
| | Available from ADEKA Corporation, trade name: ADK STAB AO-60 |
| Glass fiber-1 | Available from Nippon Electric Glass Co., Ltd., trade name: T-127 |
| | Number average fiber diameter: 13 µm, number average fiber length: 3 mm |
| Glass fiber-2 | Available from Nippon Electric Glass Co., Ltd., trade name: T-187 |
| | Number average fiber diameter: 13 µm, number average fiber length: 3 mm |
| Release agent-1 | Oxidized polyethylene wax |
| | Available from Clariant, trade name: LICOWAX PED522 |
| Release agent-2 | Montan wax |
| | Available from Clariant, trade name: LICOWAX E |
| Release agent-3 | Ethylene bisstearamide-based wax |
| | Available from KYOEISHA CHEMICAL Co., LTD., trade name: LIGHT AMIDE WH-255 |
| Release agent-4 | Pentaerythritol distearate |
| | Available from NOF CORPORATION, trade name "H476D" |
| Colorant-1 | Dye masterbatch |
| | Polybutylene terephthalate resin (82.5 mass%) |
| | Solvent Red 179 (5.6 mass%) |
| | Solvent Blue 97 (6.6 mass%) |
| | Solvent Yellow 163 (5.3 mass%) |
| Colorant-2 | Carbon black masterbatch |
| | Polybutylene terephthalate resin (80 mass%) |
| | Carbon black (20 mass%) |
| Bromine-based flame retardant | Brominated ethylene bisphthalimide |
| | Available from Albemarle Corporation, trade name: "SAYTEX BT-93W" |
| | Br content: 67% |
| Antimony compound MB | Antimony trioxide masterbatch |
| | Antimony trioxide/PBT resin: 80/20 (mass ratio) |
| | "405001" (trade name) available from SICA |

### Synthesis Example 1

A slurry in which 1,4-butanediol (BDO) was mixed in a ratio of 1.80 mol to 1.00 mol of terephthalic acid was continuously supplied to an esterification reaction tank including a screw type stirrer filled with a polybutylene terephthalate (PBT) oligomer having an esterification ratio of 99% to perform an esterification reaction. A titanium catalyst solution of tetrabutyl titanate was supplied to the esterification reaction tank in such an amount that the titanium concentration was 54 ppm by mass with respect to PBT. Additional BDO was supplied to an esterification tank such that the molar ratio of BDO to terephthalic acid was 2.5. The temperature of the reaction vessel was 226°C, the pressure was 60 kPa, and the mean residence time was 180 minutes.

Next, a PBT oligomer having an esterification ratio of 96.5% was continuously transferred to a first polycondensation reaction tank.

In the first polycondensation reaction tank, the polycondensation reaction was continuously performed. The reaction temperature was 230°C, the pressure was 3.9 kPa, and the mean residence time was 120 minutes.

Next, the product was transferred to a second polycondensation reaction tank, and the polycondensation reaction was continuously performed. The reaction temperature was 240°C, the pressure was 130 Pa, and the mean residence time was 60 minutes.

The resulting polymer was continuously extracted from a die head in a strand form through an extraction line by an extraction gear pump and a filter, and cut with a rotary cutter to produce a PBT pellet (major axis: about 3 mm, minor axis: about 2 mm, length: about 4 mm).

### Synthesis Example 2

A slurry in which BDO was mixed in a ratio of 1.80 mol to 1.00 mol of terephthalic acid was continuously supplied to an esterification reaction tank including a screw type stirrer filled with the PBT oligomer having an esterification ratio of 99% to perform the esterification reaction. A titanium catalyst solution of tetrabutyl titanate was supplied to the esterification reaction tank in such an amount that the titanium concentration was 43 ppm by mass with respect to PBT. Additional BDO was supplied to an esterification tank such that the molar ratio of BDO to terephthalic acid was 2.5. The temperature of the reaction vessel was 226°C, the pressure was 60 kPa, and the mean residence time was 180 minutes.

Next, the PBT oligomer having an esterification ratio of 96.5% was continuously transferred to a first polycondensation reaction tank. In the first polycondensation reaction tank, the polycondensation reaction was continuously performed. The reaction temperature was 230°C, the pressure was 3.9 kPa, and the mean residence time was 120 minutes. Next, the product was transferred to a second polycondensation reaction tank, and the polycondensation reaction was continuously performed. The reaction temperature was 240°C, the pressure was 130 Pa, and the mean residence time was 60 minutes.

The resulting polymer was continuously extracted from a die head in a strand form through an extraction line by an extraction gear pump and a filter, and cut with a rotary cutter to produce a PBT pellet (major axis: about 3 mm, minor axis: about 2 mm, length: about 4 mm).

### Synthesis Example 3

A slurry in which BDO was mixed in a ratio of 1.80 mol to 1.00 mol of terephthalic acid was continuously supplied to an esterification reaction tank including a screw type stirrer filled with the PBT oligomer having an esterification ratio of 99% to perform the esterification reaction. A BDO solution of tetrabutyl titanate was supplied to the esterification reaction tank in such an amount that the titanium concentration was 40 ppm by mass with respect to PBT. Additional BDO was supplied to the esterification tank such that the molar ratio of BDO to terephthalic acid was 3.2. The temperature of the reaction vessel was 226°C, the pressure was 60 kPa, and the mean residence time was 180 minutes.

Next, to the PBT oligomer having an esterification ratio of 96.5%, the BDO solution of magnesium acetate tetrahydrate was continuously supplied in an amount of 10 ppm by mass as magnesium element with respect to PBT. The oligomer was continuously transferred to a first polycondensation reaction tank. In the first polycondensation reaction tank, the polycondensation reaction was continuously performed. The reaction temperature was 230°C, the pressure was 3.9 kPa, and the mean residence time was 120 minutes. Next, the product was transferred to a second polycondensation reaction tank, and the polycondensation reaction was continuously performed. The reaction temperature was 240°C, the pressure was 130 Pa, and the mean residence time was 80 minutes.

The resulting polymer was continuously extracted from a die head in a strand form through an extraction line by an extraction gear pump and a filter, and cut with a rotary cutter to produce a PBT pellet (major axis: about 3 mm, minor axis: about 2 mm, length: about 4 mm).

### Synthesis Example 4

A slurry in which BDO was mixed in a ratio of 1.80 mol to 1.00 mol of terephthalic acid was continuously supplied to an esterification reaction tank including a screw type stirrer filled with the PBT oligomer having an esterification ratio of 99% to perform the esterification reaction. A BDO solution of tetrabutyl titanate was supplied to the esterification reaction tank in such an amount that the titanium concentration was 40 ppm by mass with respect to PBT. Additional BDO was supplied to the esterification tank such that the molar ratio of BDO to terephthalic acid was 3.2. The temperature of the reaction vessel was 226°C, the pressure was 60 kPa, and the mean residence time was 180 minutes.

Next, to the PBT oligomer having an esterification ratio of 96.5%, the BDO solution of magnesium acetate tetrahydrate was continuously supplied in an amount of 10 ppm by mass as magnesium element with respect to PBT. The oligomer was continuously transferred to a first polycondensation reaction tank. In the first polycondensation reaction tank, the polycondensation reaction was continuously performed. The reaction temperature was 230°C, the pressure was 3.9 kPa, and the mean residence time was 120 minutes. Next, the product was transferred to a second polycondensation reaction tank, and the polycondensation reaction was continuously performed. The reaction temperature was 240°C, the pressure was 130 Pa, and the mean residence time was 60 minutes.

The resulting polymer was continuously extracted from a die head in a strand form through an extraction line by an extraction gear pump and a filter, and cut with a rotary cutter to produce a PBT pellet (major axis: about 3 mm, minor axis: about 2 mm, length: about 4 mm).

### Measurement of Ti Concentration, Na Concentration, and Ca Concentration

Qualitative/semi-quantitative analysis (µg/g) of Ti, Na, and Ca in the polybutylene terephthalate resin was performed by ICP emission spectrometry. In this case, as a pre-treatment, 200 mg of a sample was weighed and subjected to Kjeldahl wet decomposition (sulfuric acid/nitric acid, sulfuric acid/hydrogen peroxide), the volume was adjusted to 50 mL, and then ICP emission spectrometry was carried out by a one-point calibration method with acid concentration matching. The used unit was ppm by mass.

The ICP emission spectrometry was carried out by axial/radial photometry using the "iCAP 7600 Duo iCAP 76000 uo" available from Thermo Fisher Scientific.

### Active Titanium Parameter X and Ratio α of Active Titanium

Five capillaries having an inner diameter of 5 mm were filled with a powder of the polybutylene terephthalate resin (pellet) produced above. Next, after the content was sufficiently purged with nitrogen, a capillary was immersed in an oil bath controlled to exactly 245°C (temperature T), taken out over time, and quenched with liquid nitrogen. Thereafter, the content was taken out, and the terminal carboxy group concentration and the terminal hydroxy group concentration were determined. Using these values, the ratio α of active titanium was determined from Equations (1), (2), and (3).
[Math. 18] $d \left[COOH\right] / dt = k \times \left[OH\right] \times X$
where d [COOH]/dt represents an amount of change over time in a terminal carboxy group concentration caused by factors other than hydrolysis reactions when polybutylene terephthalate is held at a constant temperature (T) under a nitrogen atmosphere,
t represents time (min),
[COOH] represents the terminal carboxy group concentration (µeq/g) of polybutylene terephthalate,
[OH] represents the terminal hydroxy group concentration (µeq/g) of polybutylene terephthalate, and k is a constant given by the following Equation (2) as a function of a temperature (T):
   [Math. 19] $log \left(k\right) = log \left(A\right) - \left(ΔE/R\right) \times \left(1/T\right)$
where log is a natural logarithm,
A is a constant, $log \left(A\right) = 17.792 ,$
ΔE and R are constants, $ΔE / R = 13623.5 ,$ and
T represents the absolute temperature (K). $α = X / M$
where X is an active titanium parameter, and
M is a titanium element concentration (in ppm by mass) in the polybutylene terephthalate resin.

A temporal change of the terminal carboxy group concentration is evaluated under a nitrogen atmosphere in order to prevent an influence of oxygen. When the water content in the polybutylene terephthalate resin to be evaluated is high, many hydrolysis reactions occur, and it becomes difficult to accurately grasp a decomposition behavior involving catalytic activity not due to hydrolysis; therefore, the water content is preferably low, and the evaluation is preferably performed at 300 ppm by mass or less. The evaluation is performed at a temperature of 245°C. Under such heat treatment conditions, an decrease in number average molecular weight caused by reactions other than the hydrolysis reaction caused by the moisture contained in the polybutylene terephthalate resin can be ignored, and an increase in the terminal carboxy group concentration due to the hydrolysis reaction can be regarded as being equal to an increase in terminal hydroxy group concentration before and after the heat treatment; therefore, an amount of change in the terminal carboxy group concentration due to the thermal decomposition reaction other than the hydrolysis reaction is determined by the following Equation (4).
Equation (4) $ΔAV \left(deg\right) = ΔAV \left(total\right) - ΔAV \left(hyd\right) = ΔAV \left(total\right) - ΔOH$
where ΔAV (deg) represents an amount of change in the terminal carboxy group concentration due to a thermal decomposition reaction,
ΔAV (total) represents the total amount of change in the terminal carboxy group concentration before and after heat treatment,
ΔAV (hyd) represents an amount of change in the terminal carboxy group concentration due to a hydrolysis reaction, and
ΔOH represents an amount of change in the terminal hydroxy group concentration before and after heat treatment.

### Intrinsic viscosity (IV)

The intrinsic viscosity was measured by the following method.

The pellet of the polybutylene terephthalate resin was dissolved in a mixed solvent of phenol/1, 1,2,2-tetrachloroethane (mass ratio of 1/1) at 110°C for 1 hour with stirring such that the concentration was 1.00 g/dL. The mixture was then cooled to 30°C. The number of seconds for the sample solution to fall and the number of seconds for the solvent alone to fall were each measured at 30°C using a fully automatic solution viscometer, and the intrinsic viscosity was calculated from the following equation. $Intrinsic viscosity = \left({\left(1+4{K}_{H}{η}_{sp}\right)}^{0.5}-1\right) / \left(2{K}_{H}C\right)$ where ηₛₚ = η/η₀ - 1, wherein η is the number of seconds for the sample solution to fall, η₀ is the number of seconds for the solvent alone to fall, C is the concentration (g/dL) of the sample solution, and K_{H} is the Huggins constant. A K_{H} of 0.33 was used. The used unit was dL/g.

A fully automatic solution viscometer available from Shibayama Scientific Co., Ltd. was used.

### Terminal Carboxy Group Concentration (Acid Value)

The terminal carboxy group concentration of the polybutylene terephthalate resin was determined by dissolving 0.5 g of the polybutylene terephthalate resin in 25 mL of benzyl alcohol and performing titration using a 0.01 mol/L benzyl alcohol solution of sodium hydroxide. The used unit was µmol/g (µeq/g).

### Terminal Hydroxy Group Concentration

Regarding the terminal hydroxy group concentration of the polyalkylene terephthalate resin, in a vial bottle, 25 mg of a sample was dissolved in 0.75 mL of a mixed solvent of deuterated chloroform/hexafluoroisopropanol (volume ratio: 7/3) containing a trace amount of TMS (tetramethylsilane), 25 µL of deuterated pyridine was then added, and the resulting mixture was transferred to an NMR sample tube having an outer diameter of 5 mm. A ¹H NMR spectrum was measured using a Bruke AVANCE NEO 600 spectrometer. A resonance frequency was 600 and 1 MHz, a flip angle was 45°, data acquisition was 3 s, a pulse repetition time was 10 s, the number of integrations was 16, and the temperature was 25°C.

The used unit was µmol/g.

### Terminal Vinyl Group Concentration

The terminal vinyl group concentration of the polyalkylene terephthalate resin was measured under the same conditions as the terminal hydroxy group concentration of the polyalkylene terephthalate resin. The used unit was µmol/g.

### Weight Average Molecular Weight (Mw) and Number Average Molecular Weight (Mn)

For the weight average molecular weight and the number average molecular weight of the resin, a polyalkylene terephthalate resin was weighed using HLC-8320 available from Tosoh Corporation, a predetermined amount of HFIP (hexafluoro-2-propanol) and a 10mM-CF3COONa eluent were added thereto, and the resulting mixture was allowed to stand at room temperature overnight for dissolution. Subsequently, filtration was performed with a 0.45 µm PTFE cartridge filter. The molecular weight (Mw, Mn) of the dissolved sample (filtrate) was measured by GPC. As a calibration curve, a third-order approximate curve using standard PMMA was used, and a PMMA conversion molecular weight was used.

In the measurement by GPC, Tosoh TSKgel GMHhr-M (available from Tosoh Corporation) was used as a column.

### Melting Point (Tm) Crystallization Temperature (Tc) at Time of Temperature Decrease

The crystallization temperature (Tc) of the polybutylene terephthalate resin at the time of temperature decrease was measured using a differential scanning calorimeter (DSC) in accordance with JIS K7121. In a nitrogen atmosphere, the temperature was increased from 40°C to 300°C at a temperature increase rate of 20°C/minute, and the temperature was maintained at 300°C for 3 minutes, after which the temperature was lowered to 40°C at a temperature decrease rate of -20°C/minute. This was defined as one cycle. The temperature of a maximum peak due to crystallization at the time of temperature decrease was defined as the crystallization temperature Tc at the time of temperature decrease. The melting point Tm was determined from the peak at the time of melting. The used unit was °C. The used unit was °C.

The "DSC7020" available from Hitachi High-Tech Science Corporation was used as the differential scanning calorimeter.

### Ash Content

After ashing in an electric furnace at 500°C for 3 hours and burning only the resin component, an ash content was measured from a ratio of a residue mass. A ratio of the ash content in the polyalkylene terephthalate resin was expressed in mass%.

As the electric furnace, "Electric muffle furnace KM-28" available from Toyoseisakusho was used.

### Measurement of Amounts of Metal Elements

The qualitative/semi-quantitative analysis of metal elements (Al, Fe) in the polybutylene terephthalate resin was carried out by ICP emission spectrometry. In this case, as a pre-treatment, 200 mg of a sample was weighed and subjected to Kjeldahl wet decomposition (sulfuric acid/nitric acid, sulfuric acid/hydrogen peroxide), the volume was adjusted to 50 mL, and then ICP emission spectrometry was carried out by a one-point calibration method with acid concentration matching. The used unit was ppm by mass.

The ICP emission spectrometry was carried out by axial/radial photometry using the "iCAP 7600 Duo iCAP 76000 uo" available from Thermo Fisher Scientific.

### Total Nitrogen Amount (T-N (total nitrogen amount)) in Polybutylene Terephthalate Resin

The resin was burned under an argon and oxygen atmosphere, and the generated combustion gas was measured with a trace nitrogen analyzer using a reduced pressure chemiluminescence method. At that time, aniline was dissolved in toluene and used as a standard sample.

### Apparatus

Total nitrogen analyzer: TN-2100H type available from Nittoseiko Analytech Co., Ltd.

### Total Sulfur Amount (S-N (total sulfur amount)) in Polybutylene Terephthalate Resin

The resin and a combustion aid were collected in a magnetic boat, and heated in a quartz tubular furnace, and an S component in a combustion gas was absorbed by an aqueous H₂O₂ solution. SO₄²⁻ in an absorbing solution was measured by ion chromatography.

### Apparatus

Quartz tubular furnace: AQF2100H type available from Nittoseiko Analytech Co., Ltd.
Ion chromatogram: ICS-1600 type available from Thermo Fisher Scientific Inc.

### Measurement of Ti Concentration

Qualitative/semi-quantitative analysis (in µg/g) of Ti in the polybutylene terephthalate resin was performed by ICP emission spectrometry. In this case, as a pre-treatment, 200 mg of a sample was weighed and subjected to Kjeldahl wet decomposition (sulfuric acid/nitric acid, sulfuric acid/hydrogen peroxide), the volume was adjusted to 50 mL, and then ICP emission spectrometry was carried out by a one-point calibration method with acid concentration matching. The used unit was ppm by mass.

The ICP emission spectrometry was carried out by axial/radial photometry using the "iCAP 7600 Duo iCAP 76000 uo" available from Thermo Fisher Scientific.

**[Table 3]**

| | | PBT-1 | PBT-2 | PBT-3 | PBT-4 |
|---|---|---|---|---|---|
| Active titanium parameter X | - | 9 | 15 | 13 | 30 |
| Ti concentration | ppm | 76 | 54 | 43 | 40 |
| Na concentration | ppm | 2 | 2 | 1 | ND |
| Ca concentration | ppm | 7 | ND | ND | ND |
| Ratio α of titanium activity | - | 0.12 | 0.28 | 0.3 | 0.75 |
| Intrinsic viscosity | dL/g | 0.87 | 0.85 | 0.77 | 0.85 |
| Terminal carboxy group concentration | µmol/g (µ eq/g) | 28 | 12 | 14 | 15 |
| Terminal hydroxy group concentration | µmol/g (µ eq/g) | 88 | 116 | 119 | 112 |
| Terminal vinyl group concentration | µmol/g (µ eq/g) | 5 | 4 | 4 | 4 |
| Mw | | 10700 | 9400 | 8900 | 9400 |
| Mn | | 4500 | 4700 | 4850 | 4700 |
| Mw/Mn | | 2.4 | 2 | 2 | 2 |
| IV | dL/g | 0.87 | 0.85 | 0.77 | 0.85 |
| Tm | °C | 225 | 223 | 223 | 223 |
| Tc | °C | 194 | 183 | 183 | 183 |
| Ash content | % | 0.002 | 0 | 0 | 0 |
| Al | ppm | 2 | ND | ND | ND |
| Fe | ppm | 1 | ND | ND | ND |
| T-N (total nitrogen amount) | ppm | 5 | ND | ND | ND |
| T-S (total sulfur amount) | ppm | 9 | ND | ND | ND |

**[Table 4]**

| | | PBT-5 | PBT-6 | PBT-7 |
|---|---|---|---|---|
| Active titanium parameter X | - | 30 | 30 | 10 |
| Ti concentration | ppm | 40 | 40 | 300 |
| Na concentration | ppm | ND | ND | 50 |
| Ca concentration | ppm | ND | ND | 2400 |
| Ratio α of titanium activity | - | 0.75 | 0.75 | 10 |
| Intrinsic viscosity | dL/g | 0.7 | 0.83 | 0.78 |
| Terminal carboxy group concentration | µmol/g (µ eq/g) | 15 | 15 | 44 |
| Terminal hydroxy group concentration | µmol/g (µ eq/g) | 118 | 112 | 60 |
| Terminal vinyl group concentration | µmol/g (µ eq/g) | 4 | 4 | 16 |
| Mw | | 8500 | 9130 | 15340 |
| Mn | | 4250 | 4500 | 4700 |
| Mw/Mn | | 2 | 2.0 | 2.8 |
| IV | dL/g | 0.7 | 0.83 | 0.78 |
| Tm | °C | 223 | 223 | 224 |
| Tc | °C | 183 | 183 | 194 |
| Ash content | % | 0 | 0 | 1.7 |
| Al | ppm | ND | ND | 73 |
| Fe | ppm | ND | ND | 73 |
| T-N (total nitrogen amount) | ppm | ND | ND | 2100 |
| T-S (total sulfur amount) | ppm | ND | ND | 27 |

### Examples 1-1 to 1-5, Comparative Examples 1-1 to 1-3

### Compound

The components described in Tables 1 and 2 were uniformly mixed with the components other than the glass fibers at the proportions described in Tables 4 to 6 (the components in Tables 4 to 6 are described in parts by mass) using a tumbler mixer. The resulting mixture was supplied to a twin-screw extruder from a main feed port. The cylinder temperature setting of the first kneading section was set to 260°C, and glass fibers were then supplied from the side feeder. After the addition of the glass fibers, the resin composition was melt-kneaded under conditions including a cylinder temperature setting of 220°C and a screw rotational speed of 200 rpm, and was then rapidly cooled in a water tank and pelletized using a pelletizer, and thereby pellets of the resin composition were produced.

As the extruder, "TEX30α" available from The Japan Steel Works, LTD. was used in Examples 1-1 and 1-2, Comparative Example 1-1, Example 1-3, and Comparative Example 1-2, and "TEX-53αII" available from The Japan Steel Works, Ltd. was used in Examples 1-4 and 1-5, and Comparative Example 1-3.

### Measurement of MVR of Resin Composition

The melt volume rate of the pellet of the resin composition produced above was measured in accordance with ISO 1133 under conditions including a temperature of 250°C and a load of 5 kgf. The used unit was cm³/10 min.

### Transmittance

The pellet produced above was dried at 120°C for 5 hours, and then a 60 mm square plate-shaped molded body having a thickness of 1.5 mm was injection-molded under the conditions of a cylinder temperature of 260°C and a mold temperature of 60°C using an injection molding machine ("NEX80" available from Nissei Plastic Industrial Co., Ltd.). A light transmittance (in %) of the resulting plate at a point of 45 mm from a gate and at a center of a test plate width was measured using an ultraviolet-visible spectrophotometer at 1064 nm.

As the ultraviolet-visible spectrophotometer, "UV-3300PC" equipped with an integrating sphere available from Shimadzu Corporation was used.

The unit of the transmittance was expressed in %.

### Amount of Generated Gas

An amount of gas (THF) generated in the resin composition was measured according to the following method.

The pellets of the resin composition were heated at 150°C for 10 minutes, and the resulting gas was analyzed. Gas analysis was performed by headspace gas chromatography analysis. The amount of the generated gas (THF) was measured.

The gas analysis was performed using Nexis GC-2030 available from Shimadzu Corporation.

**[Table 5]**

| | | Example 1-1 | Example 1-2 | Comparative Example 1-1 |
|---|---|---|---|---|
| Polybutylene terephthalate resin | PBT1 | 70 | 70 | |
| | PBT2 | | | |
| | PBT3 | | | |
| | PBT4 | | | 70 |
| | PBT5 | | | |
| Polycarbonate resin | | 30 | 30 | 30 |
| Polystyrene resin | | | | |
| Epoxy compound-1 | | 1.5 | 1.5 | 1.5 |
| Phosphorus stabilizer-1 | | | | |
| Phosphorus stabilizer-2 | | 0.1 | | |
| Phenolic stabilizer | | 0.3 | 0.3 | 0.30 |
| Glass fiber-1 | | 45 | 45 | 45 |
| Glass fiber-2 | | | | |
| Release agent-1 | | 0.6 | 0.6 | 0.4 |
| Release agent-2 | | | | |
| Release agent-3 | | | | |
| Colorant-1 | | 1.9 | 1.9 | 1.9 |
| Colorant-2 | | | | |
| MVR | cm³/10 min | 33 | 26 | 8 |
| Crystallization temperature Tc at the time of temperature decrease | °C | 187 | 182 | 161 |
| 1.5 mm transmittance | % | - | - | - |
| Amount of gas (THF) generated | ppm | 8 | 8 | 12 |

**[Table 6]**

| | | Example 1-3 | Comparative Example 1-2 |
|---|---|---|---|
| Polybutylene terephthalate resin | PBT1 | 75 | |
| | PBT2 | | |
| | PBT3 | | |
| | PBT4 | | |
| | PBT5 | | 75 |
| Polycarbonate resin | | 25 | 25 |
| Polystyrene resin | | 103 | 103 |
| Epoxy compound-1 | | | |
| Phosphorus stabilizer-1 | | | |
| Phosphorus stabilizer-2 | | | |
| Phenolic stabilizer | | 0.9 | 0.9 |
| Glass fiber-1 | | 90 | 90 |
| Glass fiber-2 | | | |
| Release agent-1 | | | |
| Release agent-2 | | 0.7 | 0.7 |
| Release agent-3 | | 0.7 | 0.7 |
| Colorant-1 | | | |
| Colorant-2 | | 3.9 | 3.9 |
| MVR | cm³/10 min | 16 | 10 |
| Crystallization temperature Tc at the time of temperature decrease | °C | 177 | 154 |
| 1.5 mm transmittance | % | - | - |
| Amount of gas (THF) generated | ppm | 8 | 13 |

**[Table 7]**

| | | Example 1-4 | Example 1-5 | Comparative Example 1-3 |
|---|---|---|---|---|
| Polybutylene terephthalate resin | PBT1 | | | |
| | PBT2 | 70 | | |
| | PBT3 | | 70 | |
| | PBT4 | | | 70 |
| | PBT5 | | | |
| Polycarbonate resin | | 30 | 30 | 30 |
| Polystyrene resin | | | | |
| Epoxy compound-1 | | 1.5 | 1.5 | 1.5 |
| Phosphorus stabilizer-1 | | 0.1 | 0.1 | 0.1 |
| Phosphorus stabilizer-2 | | | | |
| Phenolic stabilizer | | 0.3 | 0.3 | 0.3 |
| Glass fiber-1 | | 45 | 45 | 45 |
| Glass fiber-2 | | | | |
| Release agent-1 | | 0.6 | 0.6 | 0.4 |
| Release agent-2 | | | | |
| Release agent-3 | | | | |
| Colorant-1 | | 1.9 | 1.9 | 1.9 |
| Colorant-2 | | | | |
| MVR | cm³/10 min | 36 | 49 | 13 |
| Crystallization temperature Tc at the time of temperature decrease | °C | 164 | 166 | 137 |
| 1.5 mm transmittance | % | 80 | 78 | 44 |
| Amount of gas (THF) generated | ppm | 11 | 11 | 12 |

In the resin composition of the present invention, as compared with the resin composition of Comparative Example, when the same extruder was used, the crystallization temperature Tc at the time of temperature decrease was high, and the transmittance was high. In addition, the amount of gas contained in the pellets was successfully reduced.

The crystallization temperature Tc at the time of temperature decrease varied depending on the scale of the extruder. That is, the crystallization temperature Tc at the time of temperature decrease was low in Examples 1-4 and 1-5, and Comparative Example 1-3 continuously produced by a large machine.

### Examples 2-1 and 2-2, Comparative Example 2-1

### Compound

A pellet of the resin composition was produced in the same manner as in Example 1-1 except that each component shown in Tables 1 and 2 was used in the proportion shown in Table 8 (each component in Table 8 was expressed in parts by mass).

### Tensile Properties

The resin pellet produced as described above was dried at 120°C for 5 hours, and then an ISO multipurpose test piece (thickness: 4 mm) was injection-molded under the conditions of a cylinder temperature of 250°C and a mold temperature of 80°C using an injection molding machine ("J85AD" available from The Japan Steel Works, Ltd.).

The tensile strength (in MPa) and the tensile elastic modulus (in MPa) were measured according to ISO527-1 and ISO527-2 using the molded multipurpose ISO multipurpose test piece.

### Weld strength

According to ISO527-1 and 2, the test was performed using a type 1A test piece having a thickness of 4 mm at a test speed of 5 mm/minute. Using a mold having two gates (distance between gates: 170 mm) on a surface center line in a longitudinal direction of the test piece, the test piece with a weld formed at the center was molded under the conditions of a cylinder temperature of 250°C, a mold temperature of 80°C, and a molding cycle of 40 seconds, and the weld strength (in MPa) was measured.

### Deflection Temperature Under Load (DTUL)

Using the ISO multipurpose test piece (4 mm thickness), the deflection temperature under load (in °C) was measured under the condition of a load of 1.80 MPa in accordance with ISO75-1 and ISO75-2.

### Amount of Generated Gas

The amount of gas (THF) generated in the resin composition was measured in the same manner as in Example 1-1.

**[Table 8]**

| | | Example 2-1 | Example 2-2 | Comparative Example 2-1 |
|---|---|---|---|---|
| PBT-1 | | 42.1 | 42.9 | 0.0 |
| PBT-2 | | 0.0 | 5.7 | 42.1 |
| Polystyrene resin | | 57.9 | 51.4 | 57.9 |
| Polycarbonate resin | | 14.1 | 16.2 | 14.1 |
| Stabilizer-1 | | 0.2 | 0.2 | 0.2 |
| Stabilizer-2 | | 0.5 | 0.5 | 0.5 |
| Release agent-2 | | 0.4 | 0.4 | 0.4 |
| Release agent-3 | | 0.4 | 0.4 | 0.4 |
| Colorant-2 | | 2.2 | 2.2 | 2.2 |
| Glass fiber-2 | | 50.5 | 51.4 | 50.5 |
| Tensile elastic modulus | MPa | 12020 | 11440 | 10600 |
| Tensile strength | MPa | 122 | 127 | 118 |
| Weld strength | MPa | 24 | 27 | 21 |
| DTUL (1.80 MPa) | °C | 165 | 172 | 164 |
| Amount of gas (THF) generated | ppm | 5 | 6 | 8 |

As is apparent from the above results, the molded article formed from the resin composition of the present invention had high weld strength. Furthermore, the tensile properties were also excellent, and the deflection temperature under load was high (Example 2-1, Example 2-2). In addition, the amount of gas contained in the pellets was successfully reduced.

On the other hand, when the active titanium was out of the scope of the present invention, the weld strength was remarkably low. The tensile properties were also poor (Comparative Example 2-1).

### Examples 3-1 to 3-4, Comparative Examples 3-1 to 3-3

### Compound

The components described in Table 1 or 2 were uniformly mixed with the components other than the glass fibers at the proportions described in Table 9 or 10 (the components in Table 9 or 10 are described in parts by mass) using a tumbler mixer. A pellet of the resin composition was produced in the same manner as in Example 1-1 by using the resulting mixture in a twin-screw extruder ("TEX 30α" available from The Japan Steel Works, Ltd.).

### Measurement of MVR of Resin Composition

The MVR of the pellet of the resin composition produced above was measured in the same manner as in Example 1-1.

### Adhesive Strength

The resin pellet produced as described above was dried at 120°C for 5 hours, and then an ISO multipurpose test piece (thickness: 4 mm) was injection-molded under the conditions of a cylinder temperature of 250°C and a mold temperature of 80°C using an injection molding machine ("J-85AD-60H" available from The Japan Steel Works, Ltd.).

A NITOFLON adhesive tape (10 mm width × 0.18 mm thickness) available from Nitto Denko Corporation was attached to a chuck portion of the resulting ISO multipurpose test piece to prepare an adhesive application area of 20 mm × 20 mm square. Thereafter, an epoxy-based adhesive one-pack type/heat curable adhesive was applied to that area, the chuck portion of another identical material ISO multipurpose test piece was fixed with a bonding binder clip, and the adhesive was treated under prescribed curing conditions to be bonded.

Using AUTOGRAPH AGS-X 10 kN available from Shimadzu Corporation, a tensile test was performed at a tensile speed of 5 mm/minute to measure the adhesive strength (in N).

### Tensile Properties

The pellet produced above was dried at 110°C for 5 hours, and a 4 mm thick ISO test piece was injection-molded using an injection molding machine ("J85AD" available from The Japan Steel Works, Ltd.) under conditions including a cylinder temperature of 250°C and a mold temperature of 80°C.

The tensile elastic modulus (in MPa), tensile strength (in MPa), and tensile fracture strain (in %) of the ISO test piece (4 mm thickness) produced above were measured according to ISO527-1 and ISO527-2.

### Amount of Generated Gas

The amount of gas (THF) generated in the resin composition was measured in the same manner as in Example 1-1.

**[Table 9]**

| | | Example 3-1 | Example 3-2 | Example 3-3 | Example 3-4 |
|---|---|---|---|---|---|
| PBT-1 | Parts by mass | 100 | 100 | 100 | |
| PBT-6 | Parts by mass | | | | |
| PBT-7 | Parts by mass | | | | 100 |
| Epoxy compound-2 | Parts by mass | | 0.58 | | |
| Epoxy compound-1 | Parts by mass | | | 1.45 | |
| Phenolic stabilizer | Parts by mass | 0.29 | 0.29 | 0.29 | 0.29 |
| Glass fiber-1 | Parts by mass | 43.0 | 43.2 | 43.6 | 43.0 |
| MVR (250°C/5 kgf) | cm³/10 min | 36 | 35 | 30 | 40 |
| Epoxy adhesive strength | N | 1400 | 1600 | 1540 | 1520 |
| Tensile elastic modulus | MPa | 9429 | 9338 | 9449 | 9720 |
| Tensile strength | MPa | 130 | 131 | 134 | 108 |
| Tensile fracture strain | % | 2.8 | 2.9 | 2.9 | 2.0 |
| Amount of generated gas (THF) | ppm | 12 | 13 | 13 | 14 |

**[Table 10]**

| | | Comparative Example 3-1 | Comparative Example 3-2 | Comparative Example 3-3 |
|---|---|---|---|---|
| PBT-1 | Parts by mass | | | |
| PBT-6 | Parts by mass | 100 | 100 | 100 |
| PBT-7 | Parts by mass | | | |
| Epoxy compound-2 | Parts by mass | | 0.58 | |
| Epoxy compound-1 | Parts by mass | | | 1.45 |
| Phenolic stabilizer | Parts by mass | 0.29 | 0.29 | 0.29 |
| Glass fiber-1 | Parts by mass | 43.0 | 43.2 | 43.6 |
| MVR (250°C/5 kgf) | cm³/10 min | 39 | 38 | 34 |
| Epoxy adhesive strength | N | 970 | 990 | 1000 |
| Tensile elastic modulus | MPa | 9837 | 9786 | 9993 |
| Tensile strength | MPa | 142 | 143 | 143 |
| Tensile fracture strain | % | 3.0 | 3.4 | 3.5 |
| Amount of generated gas (THF) | ppm | 20 | 20 | 20 |

As is apparent from the above results, the molded article formed from the resin composition of the present invention had high adhesive strength to the epoxy-based adhesive (Examples 3-1 to 3-4). The molded article was also excellent in various mechanical properties. In addition, the amount of gas contained in the pellet was successfully reduced.

On the other hand, when the polybutylene terephthalate resin having a small total nitrogen element amount was used (Comparative Examples 3-1 to 3-3), the adhesive strength to the epoxy-based adhesive was low. Furthermore, the amount of generated gas contained in the pellet was also large.

### Examples 4-1 to 4-3, Comparative Examples 4-1 to 4-2

### Compound

The components described in Table 1 or 2 were uniformly mixed with the components other than the glass fibers at the proportion described in Table 11 (the components in Table 11 are described in parts by mass) using a tumbler mixer. A pellet of the resin composition was produced in the same manner as in Example 1-1 by using the resulting mixture in a twin-screw extruder ("TEX 30α" available from The Japan Steel Works, Ltd.).

### Tensile Strength

The resin pellet produced as described above was dried at 120°C for 5 hours, and then an ISO multipurpose test piece (thickness: 4 mm) was injection-molded under the conditions of a cylinder temperature of 250°C and a mold temperature of 80°C using an injection molding machine ("J85AD" available from The Japan Steel Works, Ltd.).

The tensile strength (in MPa) was measured according to ISO527-1 and ISO527-2 using the molded multipurpose ISO multipurpose test piece.

### Amount of Gas Generated by Heating (ppm)

The resulting pellet was heated at 280°C for 10 minutes, a gas generated was flowed with He, and the gas generated at -10°C was trapped. The trapped substance was analyzed by GC-MS. The gas amount of tetrahydrofuran (THF) and the gas amount of 1,4BG (1,4-butanediol) were measured. The gas amount was expressed in ppm by mass in terms of decane.

### GC-MS Condition

The gas was held at 50°C for 2 minutes, then the temperature was raised to 380°C at 10°C/minute, and a detected substance was calculated in terms of decane concentration.
Apparatus: TD-20 (TD)/GC-2010 Plus (GC)/GC-MS-QP-2010 Ultra (MS) available from Shimadzu Corporation
Column: UA5 0.25 mm ID × 30 m

### Flame Retardancy

The pellets produced above were dried at 110°C for 5 hours, and then injection-molded into a combustion test piece (12.7 mm in width × 127 mm in length × 1.5 mm in thickness) under conditions of a cylinder temperature of 250°C and a mold temperature of 80°C using an injection molding machine ("J-50AD" available from The Japan Steel Works, Ltd.).

The resulting combustion test piece was allowed to stand in an atmosphere at 70°C for 1 week, after which the flame retardancy was evaluated according to the method set forth in Subject 94 (UL94) of the Underwriters Laboratories.

**[Table 11]**

| | | Example 4-1 | Example 4-2 | Example 4-3 | Comparative Example 4-1 | Comparative Example 4-2 |
|---|---|---|---|---|---|---|
| PBT-6 | | 71.5 | 52.5 | 33.5 | 100.0 | 100.0 |
| PBT-1 | | 28.5 | 47.5 | 66.5 | 0.0 | 0.0 |
| AS resin | Parts by mass | 0.0 | 0.0 | 39.9 | 0.0 | 39.9 |
| Bromine-based flame retardant | | 22.8 | 22.8 | 31.9 | 22.8 | 31.9 |
| Antimony compound MB | | 7.6 | 7.6 | 10.6 | 7.6 | 10.6 |
| Colorant 2 | | 1.9 | 1.9 | 1.9 | 1.9 | 1.9 |
| Phenolic stabilizer | | 0.2 | 0.2 | 0.3 | 0.2 | 0.3 |
| Release agent-4 | | 0.6 | 0.6 | 0.8 | 0.6 | 0.8 |
| Glass fiber-2 | | 57.0 | 57.0 | 57.0 | 57.0 | 57.0 |
| Tensile strength (MPa) | (MPa) | 130 | 125 | 121 | 134 | 126 |
| Gas generated by heating (ppm) | THF | 60 | 60 | 70 | 80 | 90 |
| Gas generated by heating (ppm) | 1,4 BG | 110 | 60 | 110 | 160 | 190 |
| Flame retardancy | Determination | V-0 | V-0 | V-0 | V-0 | V-0 |

As is apparent from the above results, the resin composition of the present invention contained the polybutylene terephthalate resin having a low titanium activity parameter, and thus successfully and effectively suppressed the generation of gas.

Although the present invention has been described in detail with reference to specific aspects, it will be apparent to those skilled in the art that various modifications can be made without departing from the spirit and scope of the present invention.

## Claims

1. A resin composition comprising:
a polybutylene terephthalate resin; and
at least one of an amorphous thermoplastic resin having a carbonate bond and/or an ester bond or a polystyrene-based resin,
wherein the polybutylene terephthalate resin has an active titanium parameter X shown below of 25 or less:
[Math. 1] $d \left[COOH\right] / dt = k \times \left[OH\right] \times X$
where d [COOH]/dt represents an amount of change over time in a terminal carboxy group concentration caused by factors other than hydrolysis reactions when polybutylene terephthalate is held at a constant temperature (T) under a nitrogen atmosphere,
t represents time (min),
[COOH] represents the terminal carboxy group concentration (µeq/g) of polybutylene terephthalate,
[OH] represents the terminal hydroxy group concentration (µeq/g) of polybutylene terephthalate, and k is a constant given by the following Equation (2) as a function of a temperature (T):
[Math. 2] $log \left(k\right) = log \left(A\right) - \left(ΔE/R\right) \times \left(1/T\right)$
where log is a natural logarithm,
A is a constant, $log \left(A\right) = 17.792 ,$
ΔE and R are constants, $ΔE / R = 13623.5 ,$ and
T represents the absolute temperature (K).

2. A resin composition comprising:
a polybutylene terephthalate resin; and
at least one selected from the group consisting of an inorganic filler, a release agent, and a stabilizer,
wherein the polybutylene terephthalate resin has a total nitrogen element amount of from 0.1 to 3000 ppm by mass and an active titanium parameter X shown below of 25 or less:
[Math. 3] $d \left[COOH\right] / dt = k \times \left[OH\right] \times X$
where d [COOH]/dt represents an amount of change over time in a terminal carboxy group concentration caused by factors other than hydrolysis reactions when polybutylene terephthalate is held at a constant temperature (T) under a nitrogen atmosphere,
t represents time (min),
[COOH] represents the terminal carboxy group concentration (µeq/g) of polybutylene terephthalate,
[OH] represents the terminal hydroxy group concentration (µeq/g) of polybutylene terephthalate, and k is a constant given by the following Equation (2) as a function of a temperature (T):
[Math. 4] $log \left(k\right) = log \left(A\right) - \left(ΔE/R\right) \times \left(1/T\right)$
where log is a natural logarithm,
A is a constant, $log \left(A\right) = 17.792 ,$
ΔE and R are constants, $ΔE / R = 13623.5 ,$ and
T represents the absolute temperature (K).

3. The resin composition according to claim 1 or 2, wherein the polybutylene terephthalate resin contains a recycled polybutylene terephthalate resin.

4. The resin composition according to any one of claims 1 to 3, further comprising a flame retardant.

5. The resin composition according to any one of claims 1 to 4, wherein the active titanium parameter X is 12 or less.

6. The resin composition according to any one of claims 1 to 5, wherein the polybutylene terephthalate resin contains a titanium element in an amount of from 30 to 500 ppm by mass.

7. The resin composition according to any one of claims 1 to 6, comprising an inorganic filler,
wherein the inorganic filler is a fibrous reinforcing material.

8. The resin composition according to any one of claims 1 to 7, wherein the polybutylene terephthalate resin has a terminal carboxy group concentration of 25 µmol/g or greater.

9. The resin composition according to any one of claims 1 to 8, wherein the polybutylene terephthalate resin has a Mw/Mn of 2.1 or greater.

10. The resin composition according to any one of claims 1 to 9, further comprising a recycled polyethylene terephthalate resin.

11. The resin composition according to any one of claims 1 to 10, wherein the polybutylene terephthalate resin has a total sulfur element amount of from 0.1 to 100 ppm by mass.

12. The resin composition according to any one of claims 1 to 11, wherein the polybutylene terephthalate resin contains a sodium element in an amount of from 0.1 to 100 ppm by mass.

13. The resin composition according to any one of claims 1 to 12, wherein the polybutylene terephthalate resin contains a calcium element in an amount of from 0.1 to 3000 ppm by mass.

14. The resin composition according to any one of claims 1 to 13, wherein the polybutylene terephthalate resin has a terminal vinyl group concentration of from 1 to 15 µmol/g.

15. The resin composition according to any one of claims 1 to 14, wherein a ratio α of active titanium represented by Equation (3) below in the polybutylene terephthalate resin is 0.50 or less: $α = X / M$
where X is an active titanium parameter, and
M is a titanium element concentration (in ppm by mass) in the polybutylene terephthalate resin.

16. The resin composition according to any one of claims 1 and 3 to 15, wherein the amorphous thermoplastic resin having a carbonate bond and/or an ester bond contains a polycarbonate resin.

17. The resin composition according to any one of claims 1 to 16, wherein the polybutylene terephthalate resin contains a polybutylene terephthalate resin derived from material recycling.

18. The resin composition according to any one of claims 1 to 17, further comprising a reactive compound.

19. The resin composition according to any one of claims 1 to 18, which is for injection molding.

20. A pellet of the resin composition described in any one of claims 1 to 19.

21. A molded article formed from the resin composition described in any one of claims 1 to 19.

22. A molded article formed from the pellet described in claim 20.
